# EUROPÄISCHE PATENTSCHRIFT

(11) **EP 4 055 323 B1**
(45) Veröffentlichungstag und Bekanntmachung des Hinweises auf die Patenterteilung: **21.06.2023**
(21) Anmeldenummer: 20728906.7
(22) Anmeldetag: 12.05.2020
(51) Int. Cl.: F21V 33/00, F21S 2/00, F21V 21/15, F21V 23/04, G08B 5/36, H05B 47/13, F21W 131/208, F21Y 115/10

(54) **BELEUCHTUNGSMODUL**
LIGHTING MODULE
MODULE D'ÉCLAIRAGE

(30) Priorität: 05.05.2020 AT 503802020
(43) Veröffentlichungstag der Anmeldung: 14.09.2022
(73) Patentinhaber: Opus Novo GmbH, 8020 Graz (AT)
(72) Erfinder: FRANKL, Andreas, 8020 Graz (AT)
(74) Vertreter: Wildhack & Jellinek
(86) Internationale Anmeldenummer: PCT/AT2020/060195
(87) Internationale Veröffentlichungsnummer: WO 2021/222951

(56) Entgegenhaltungen:
- EP-A2- 2 991 452
- US-A1- 2009 135 602
- US-A1- 2018 315 287
- US-B2- 10 509 304

## Beschreibung

Die Erfindung betrifft ein Beleuchtungsmodul zur gesteuerten Abgabe von Licht mittels Beleuchtungselementen gemäß Patentanspruch 1.

Es können verschiedenste Umstände auftreten, unter denen Personen den Weg beispielsweise zu einem Ausgang aus einem Raum oder einem Gebäude nicht mehr selbstständig finden können. Als ein Beispiel sei in diesem Zusammenhang starke Rauchentwicklung in einem Gebäude bei einem Brand genannt, die es Personen erschwert, die Gegebenheiten in einem Raum bzw. Gebäude konkret wahrzunehmen und einen Ausgang zu finden, um sich in Sicherheit zu bringen. Ein weiteres Beispiel in diesem Zusammenhang sind ältere oder demenzkranke Personen, die speziell bei Nacht große Schwierigkeiten haben, sich selbst in ihnen vertrauten Räumlichkeiten zu orientieren und beispielsweise den Weg ins Badezimmer oder in die Küche zu finden.

Aus dem Stand der Technik sind in diesem Zusammenhang verschiedene Beleuchtungsmöglichkeiten für einzelne Räume oder ausgehend von Möbelstücken z.B. aus der FR 2982135 A1, der DE 19746194 A1, der US 2018/315287 A1, der US 2017/020297 A1 oder der EP 1857737 A1 bekannt, bei denen die Beleuchtung eingeschaltet wird, wenn z.B. eine Bewegung einer Person detektiert wird. Eine solche, mit einem Sensor kombinierte, herkömmliche Beleuchtung eines Raums, beispielsweise von der Decke oder bestimmten Möbelstücken aus, ist in vielen Fällen jedoch nicht geeignet, Personen gezielt beispielsweise zu einem Notausgang oder einer bestimmten Tür zu leiten, da dann zwar der gesamte Raum erleuchtet wird, jedoch keine spezielle Orientierungshilfe bereitgestellt wird. Weiters kann speziell von älteren oder demenzkranken Personen eine solche herkömmliche Raumbeleuchtung oft als unangenehm oder zu hell empfunden werden, was das Wiedereinschlafen erschwert. Die US 10509304 B2 offenbart den Oberbegriff des Anspruches 1.

Daher ist es wünschenswert ein Beleuchtungsmodul zur Verfügung zu stellen, das eine gesteuerte Abgabe von Licht mittels Beleuchtungselementen ermöglicht, sodass Personen durch gesteuerte Lichtabgabe gezielt zu einem Ausgang oder in bestimmte Räumlichkeiten geleitet werden, wodurch ein rasches Flüchten aus einem Gebäude bei Gefahr oder ein sicheres Zurücklegen eines bestimmten Wegs auch bei Dunkelheit oder im Falle von Orientierungslosigkeit gewährleistet werden können.

Die Erfindung löst diese Aufgabe mit einem Beleuchtungsmodul zur gesteuerten Abgabe von Licht mittels Beleuchtungselementen gemäß Patentanspruch 1.

Durch diese Ausgestaltung eines erfindungsgemäßen Beleuchtungsmoduls ist es vorteilhafterweise möglich, dass die von den einzelnen Beleuchtungselementen ausgeleuchteten Areale bzw. Lichtpunkte gezielt eingestellt werden können, sodass Personen sicher und zuverlässig beispielsweise zu einem bestimmten Raum oder einem Notausgang geleitet werden können, wenn die Beleuchtungselemente aktiviert sind.

Durch die Überwachung eines geeigneten Parameters in der Umgebung des Beleuchtungsmoduls mittels des Sensors ist sichergestellt, dass die Steuereinheit die einzelnen Beleuchtungselemente nur dann aktiviert, wenn dies erforderlich ist und der vom Sensor ermittelt Messwert dem vorgegebenen Kriterium entspricht. Dies hilft einerseits den Energieverbrauch des Beleuchtungsmoduls gering zu halten, da die Beleuchtungselemente von der Steuereinheit nur aktiviert werden, wenn der vom Sensor ermittelte Messwert dem vorgegebenen Kriterium entspricht. Andererseits ermöglicht diese Ausgestaltung des erfindungsgemäßen Beleuchtungsmoduls auch, dass die Steuereinheit die einzelnen Beleuchtungselemente nur dann aktiviert, wenn dies auch erforderlich ist, sodass Personen beispielsweise sicher zu einem Ausgang oder dem Eingang ins Badezimmer geleitet werden, indem ausgewählte Beleuchtungselemente des Beleuchtungsmoduls von der Steuereinheit aktiviert beispielsweise eingeschaltet und/oder in eine entsprechende Rotations- und/oder Schwenkposition gebracht werden.

Unter einem "Beleuchtungselement" wir im Zusammenhang mit der Erfindung jegliches Element verstanden, das einen bestimmten Bereich in der Umgebung des Beleuchtungsmoduls, beispielsweise in Form eines Lichtkegels oder Lichtpunkts, beleuchten kann. Dazu kann das Beleuchtungselement selbst über eine Lichtquelle bzw. ein Leuchtmittel verfügen oder von einer separaten, externen Lichtquelle angestrahlt werden und beispielsweise mit Hilfe eines Filters oder einer Schablone einen bestimmten Umgebungsbereich ausleuchten.

Unter "Parameter" wird im Zusammenhang mit der Erfindung jede beliebige Größe verstanden, die mit einem beliebigen Sensor gemessen werden kann. Unter einem "Messwert des Parameters" wird im Zusammenhang mit der Erfindung der konkrete Wert des Parameters verstanden, der von einem Sensor bei einer konkreten Messung bestimmt bzw. ermittelt wird.

Um eine optimal ausgeleuchtete Kennzeichnung des Wegs zu einem zum Beispiel Notausgang oder einer Tür in einem bestimmten Raum zu gewährleisten, kann vorgesehen sein, dass die Steuereinheit dazu ausgebildet ist, ausgewählte Beleuchtungselemente einzeln zu deaktivieren, insbesondere auszuschalten und/oder die Verstellung der Rotations- und/oder Schwenkposition des jeweiligen Beleuchtungselements zu beenden, und/oder die Helligkeit der ausgewählten Beleuchtungselemente zu dimmen, wenn von dem zumindest einen Sensor ein zumindest einem vorgegebenen Kriterium entsprechender Messwert ermittelt wird.

Eine besonders gezielte Leitung von Personen mittels des Beleuchtungsmoduls kann gewährleistet werden, wenn die Steuereinheit dazu ausgebildet ist, die ausgewählten Beleuchtungselemente in einer vorgegebenen Reihenfolge, insbesondere in einem vorgegebenen zeitlichen Abstand zueinander, einzeln zu aktivieren und/oder zu deaktivieren und/oder deren Helligkeit einzustellen bzw. zu dimmen.

Diese Ausgestaltung eines erfindungsgemäßen Beleuchtungsmoduls ermöglicht es vorteilhafterweise, die einzelnen ausgewählten Beleuchtungselemente in einer vorgegebenen Reihenfolge, beispielsweise ausgehend von einem Ort, an dem sich Personen für gewöhnlich aufhalten, beispielsweise einem Bett oder Schreibtisch, nacheinander zu aktivieren, sodass diese zuverlässig den Weg zu einem Ausgang aus dem Raum weisen, selbst wenn der Weg dorthin stark verraucht sein oder im Dunkeln liegen sollte.

Ein Beleuchtungsmodul, das Personen unter verschiedensten Umständen zuverlässig einen vorgegebenen Weg weist bzw. ausleuchtet, kann bereitgestellt werden, wenn der zumindest eine Sensor
- ein Bewegungssensor, insbesondere ein Ultraschall-Bewegungssensor oder ein Infrarot-Bewegungssensor, oder
- ein Erschütterungssensor, insbesondere ein Beschleunigungssensor, oder
- eine Lichtschranke, insbesondere ein Reflexions-Lichttaster, oder
- ein für zumindest einen chemischen Stoff, insbesondere einen Schadstoff, sensitiver Sensor, insbesondere ein für CO₂ sensitiver Sensor,
ist.

Durch die Verwendung derartiger Sensoren kann beispielsweise sichergestellt werden, dass die Steuereinheit die einzelnen ausgewählten Beleuchtungselemente aktiviert, wenn in der Umgebung des Beleuchtungsmoduls die Bewegung einer Person detektiert wird, oder wenn beispielsweise eine in einem Bett liegende Person das Bett verlässt oder wenn beispielsweise ein bestimmter chemischer Stoff oder Schadstoff in der Umgebung des Beleuchtungsmoduls vorhanden ist.

Eine besonders gezielte Festlegung der Aktivierung, Deaktivierung und/oder des Dimmens der einzelnen ausgewählten Beleuchtungselemente durch die Steuereinheit angepasst an den Verwendungszweck bzw. den Verwendungsort des Beleuchtungsmoduls kann gewährleistet werden, wenn die Steuereinheit dazu ausgebildet ist, für die Aktivierung und/oder Deaktivierung und/oder das Einstellen bzw. Dimmen der Helligkeit der Beleuchtungselemente zumindest eines der folgenden Kriterien heranzuziehen:
- dass der vom Sensor ermittelte Messwert des, insbesondere physikalischen und/oder chemischen, Parameters eine Bewegung einer Person in der Umgebung des Beleuchtungsmoduls indiziert,
- dass der vom Sensor ermittelte Messwert des, insbesondere physikalischen und/oder chemischen, Parameters indiziert, dass sich keine Person in der Umgebung des Beleuchtungsmoduls bewegt,
- dass die zeitliche Änderung des vom Sensor ermittelten Messwerts des, insbesondere physikalischen und/oder chemischen, Parameters einen vorgegebenen Schwellenwert übersteigt,
- dass der vom Sensor ermittelte Messwert des, insbesondere physikalischen und/oder chemischen, Parameters einen vorgegebenen Schwellenwert übersteigt.

Die Festlegung zumindest eines dieser Kriterien für die Aktivierung bzw. Deaktivierung bzw. Dimmung der Beleuchtungselemente durch die Steuereinheit ermöglicht es vorteilhafterweise, dass Beleuchtungsmodule gezielt, beispielsweise in Pflegeeinrichtungen für die Sturzprävention pflegebedürftiger Personen oder in einem Leitsystem zu Notausgängen, eingesetzt werden können.

Ein Beleuchtungsmodul, das besonders zuverlässig sicherstellt, dass die einzelnen Beleuchtungselemente nur aktiviert werden, wenn sich eine pflegebedürftige Person aus dem Bett begibt, jedoch nicht, wenn beispielsweise eine Pflegekraft den Raum betrifft, kann bereitgestellt werden, wenn das Beleuchtungsmodul einen Bewegungssensor und einen Erschütterungssensor umfasst, und wenn die Steuereinheit dazu ausgebildet ist,
- bei gleichzeitiger Detektion einer Bewegung einer Person in der Umgebung des Beleuchtungsmoduls durch den Bewegungssensor und den Erschütterungssensor die Beleuchtungselemente einzeln in einer vorgegebenen Reihenfolge zu aktivieren, und insbesondere anschließend für einen vorgegebenen Zeitraum aktiviert zu halten,
- die Beleuchtungselemente zu deaktivieren, wenn durch den Bewegungssensor und den Erschütterungssensor keine Bewegung einer Person in der Umgebung des Beleuchtungsmoduls detektiert wird und
- bei Detektion einer Bewegung einer Person in der Umgebung des Beleuchtungsmoduls nur durch den Bewegungssensor die Beleuchtungselemente einzeln in umgekehrter Reihenfolge zu aktivieren.

Eine besonders gezielte z.B. Aktivierung der einzelnen ausgewählten Beleuchtungselemente durch die Steuereinheit, die angepasst werden kann an die Geschwindigkeit, mit der sich eine Person durch einen Raum oder ein Gebäude bewegt, kann gewährleistet werden,
- wenn eine Mehrzahl gleichartiger Sensoren am Beleuchtungsmodul derart angeordnet ist, dass jeder der Sensoren zumindest einen physikalischen und/oder chemischen Parameter in einem vorgegebenen Teilbereich der Umgebung des Beleuchtungsmoduls misst,
- wenn jedem der Sensoren ein Beleuchtungselement zugeordnet ist und
- wenn die Steuereinheit dazu ausgebildet ist, wenn von einem Sensor ein zumindest einem vorgegebenen Kriterium entsprechender Messwert ermittelt wird, das dem jeweiligen Sensor zugeordnete Beleuchtungselement zu aktivieren und/oder zu deaktivieren und/oder dessen Helligkeit einzustellen, insbesondere zu dimmen.

Durch diese Ausgestaltung eines erfindungsgemäßen Beleuchtungsmoduls ist es vorteilhafterweise möglich, dass die einzelnen Sensoren Teilbereiche der Umgebung des Beleuchtungsmoduls überwachen und wenn in diesem Teilbereich ein entsprechender Messwert vom Sensor ermittelt wird, das diesem Teilbereich zugeordnete Beleuchtungselement aktiviert, deaktiviert oder gedimmt wird.

Um beispielsweise eine optimale Beleuchtungsintensität durch die einzelnen Beleuchtungselemente zu gewährleisten, selbst wenn ein Raum bereits stark verraucht ist, oder auch um den Schlafrhythmus einer Person nicht durch zu helle Beleuchtung zu beeinträchtigen, kann vorgesehen sein,
- dass das Beleuchtungsmodul einen Helligkeitssensor zur Ermittlung eines Messwerts der Helligkeit in der Umgebung des Beleuchtungsmoduls umfasst, wobei der Helligkeitssensor mit der Steuereinheit in Datenkommunikation steht und
- dass die Steuereinheit dazu ausgebildet ist, die Helligkeit der Beleuchtungselemente in Abhängigkeit von dem vom Helligkeitssensor ermittelten Helligkeitsmesswert einzustellen.

Durch die von einem derartigen Helligkeitssensor bereitgestellten Helligkeitsmesswerte können vorteilhafterweise auch Informationen über die Tageszeit abgleitet werden, sodass die Steuereinheit die Beleuchtungselemente je nach Tageszeit zur Kennzeichnung verschiedener Wege ansteuern kann, oder auch das Laden von z.B. einem im Beleuchtungsmodul untergebrachten Akku steuern kann.

Eine optimale Anpassung des erfindungsgemäßen Beleuchtungsmoduls an die jeweiligen räumlichen Gegebenheiten bzw. eine besonders individuell anpassbare Einstellung der von den einzelnen Beleuchtungselementen ausgeleuchteten Areale bzw. Lichtpunkte kann erzielt werden, wenn die einzelnen Beleuchtungselemente jeweils folgende Bestandteile umfassen:
- ein Leuchtmittel, insbesondere eine Leuchtdiode, und
- zur Einstellung des vom Leuchtmittel ausgeleuchteten Umgebungsbereichs, insbesondere eines Lichtpunkts, eine Linse und/oder ein, insbesondere hohlzylindrisch ausgebildetes, Fokussierungselement.

Eine besonders gezielte Leitung von beispielsweise pflegebedürftigen Personen zu verschiedenen Bereichen bzw. Räumen in ihrer Wohnung, angepasst an beispielsweise die je nach Tageszeit variierenden Bedürfnisse, kann erzielt werden, wenn jedes Beleuchtungselement mehrfarbige Leuchtmittel, insbesondere mehrfarbige Leuchtdioden oder mehrere, Licht unterschiedlicher Wellenlänge abgebende Leuchtdioden, umfasst, wobei insbesondere vorgesehen sein kann, dass die Steuereinheit dazu ausgebildet ist,
- die von den Leuchtmitteln abgegebene Lichtfarbe in Abhängigkeit von dem vom Helligkeitssensor ermittelten Helligkeitsmesswert auszuwählen und/oder
- die Tageszeit zu ermitteln und in Abhängigkeit von der Tageszeit die von den Leuchtmitteln abgegebene Lichtfarbe auszuwählen.

Eine besonders gezielte automatisierte Einstellung der Rotations- und Schwenkposition der einzelnen Beleuchtungselemente kann erzielt werden, wenn jedes Beleuchtungselement eine Verstellvorrichtung zur Einstellung der Rotationsposition und/oder der Neigung des Beleuchtungselements, insbesondere in Bezug auf die gemeinsame Achse, umfasst, wobei die Verstellvorrichtung der Steuereinheit nachgeschaltet ist,
wobei insbesondere vorgesehen sein kann, dass die Steuereinheit dazu ausgebildet ist,
- die Rotationsposition und/oder die Neigung des jeweiligen Beleuchtungselements in Abhängigkeit von dem vom Helligkeitssensor ermittelten Helligkeitsmesswert mittels der Verstellvorrichtung einzustellen und/oder
- die Tageszeit zu ermitteln und die Rotationsposition und/oder die Neigung des jeweiligen Beleuchtungselements in Abhängigkeit von der Tageszeit mittels der Verstellvorrichtung einzustellen.

Diese Ausgestaltung eines erfindungsgemäßen Beleuchtungsmoduls ermöglicht es vorteilhafterweise, dass die Steuereinheit besonders gezielt beispielsweise in Abhängigkeit von den Messwerten des Sensors, der die Umgebung des Beleuchtungsmoduls überwacht, oder auch in Abhängigkeit von den Messwerten beispielsweise eines Helligkeitssensors die Rotations- und Schwenkposition bzw. Neigungen der einzelnen Beleuchtungselemente einstellen kann.

Eine Möglichkeit für eine besonders einfache Erweiterung des Beleuchtungsmoduls wird dadurch bereitgestellt, dass das Beleuchtungsmodul erfindungsgemäß modular aus einer Mehrzahl von einzelnen Segmenten aufgebaut ist, wobei jedes Beleuchtungselement jeweils in einem separaten Segment untergebracht ist und wobei das Beleuchtungsmodul durch weitere Segmente, insbesondere durch weitere Segmente mit Beleuchtungselementen, erweiterbar ist.

Auf diese Weise ist es erfindungsgemäß möglich, beispielsweise Segmente mit Beleuchtungselementen hinzuzufügen oder auch wieder zu entfernen, wenn das Beleuchtungsmodul beispielsweise nacheinander an verschiedenen Orten eingesetzt werden soll. So ist es möglich, beispielsweise zusätzliche Segmente mit Beleuchtungselementen hinzuzufügen, um eine Anpassung an die jeweiligen räumlichen Gegebenheiten zu erzielen und beispielsweise eine besonders dichte Abfolge von Beleuchtungspunkten zu erzielen oder eine besonders weite Strecke beispielsweise bis zu einem Notausgang auszuleuchten.

Besonders kompakt wird das erfindungsgemäße Beleuchtungsmodul dadurch ausgestaltet, dass es eine im Wesentlichen zylindrische Form aufweist, wobei vorgesehen ist, dass die Segmente des Beleuchtungsmoduls Teilabschnitte des Beleuchtungsmoduls mit im Wesentlichen zylindrischer Form bilden. Ein besonders einfaches händisches oder auch automatisiertes Einstellen der Rotationsposition der einzelnen Beleuchtungselemente bzw. -segmente kann erzielt werden, wenn ausgewählte Segmente des Beleuchtungsmoduls, insbesondere ausgewählte Segmente mit Beleuchtungselementen, um die Längsachse des Beleuchtungsmoduls drehbar sind.

Um eine besonders gezielte und störungsfreie Messung des Parameters in der Umgebung des Beleuchtungsmoduls durch den Sensor bei gleichzeitig besonders kompakter Bauweise des Beleuchtungsmoduls zu gewährleisten, kann vorgesehen sein, dass die Steuereinheit und der zumindest eine Sensor in einem gemeinsamen, insbesondere halbkugelförmigen, Steuer-/Sensorsegment untergebracht sind,
wobei insbesondere vorgesehen sein kann,
- dass das Steuer-/Sensorsegment ein Ende des Beleuchtungsmoduls bildet und/oder
- dass das Steuer-/Sensorsegment ein stationäres, der Steuereinheit nachgeschaltetes, Leuchtmittel, insbesondere eine Leuchtdiode, umfasst.

Eine besonders einfache Montage eines erfindungsgemäßen Beleuchtungsmoduls an verschiedensten Stellen eines Möbelstücks kann gewährleistet werden, wenn das Beleuchtungsmodul eine Haltevorrichtung umfasst, wobei die Haltevorrichtung zur Befestigung des Beleuchtungsmoduls auf einem Möbelstück, insbesondere einem Bett, vorzugsweise einem Fußteil oder Kopfteil eines Pflegebetts, ausgebildet ist.

So kann beispielsweise ein Beleuchtungsmodul mit besonders geringem Montageaufwand und gleichzeitig dauerhaft und zuverlässig an einem Möbelstück angeordnet oder bei Bedarf wieder abgenommen werden. Dabei kann ein Möbelstück auch eine als Gegenstück zur Haltevorrichtung ausgebildete Aufnahmevorrichtung aufweisen, sodass das Beleuchtungsmodul besonders einfach befestigt werden kann.

Eine besonders zuverlässige Leitung von Personen zum Beispiel über mehrere Räume oder Gänge eines Gebäudes hinweg hin zu beispielsweise einem Notausgang kann gewährleistet werden,
- wenn das Beleuchtungsmodul eine, insbesondere WLAN- oder Bluetooth-fähige, Kommunikationseinheit umfasst, wobei die Kommunikationseinheit der Steuereinheit nachgeschaltet ist,
- wenn die Kommunikationseinheit dazu ausgebildet ist, eine Kommunikationsverbindung mit weiteren, insbesondere gleichartig aufgebauten, Beleuchtungsmodulen und/oder, insbesondere WLAN- oder Bluetooth-fähigen, Beleuchtungskörpern herzustellen, und
- dass die Steuereinheit dazu ausgebildet ist, wenn von dem zumindest einen Sensor ein zumindest einem vorgegebenen Kriterium entsprechender Messwert ermittelt wird,
   - ausgewählte Beleuchtungskörper zu aktivieren und/oder zu deaktivieren und/oder deren Helligkeit zu dimmen
      und/oder
   - die Steuereinheit ausgewählter weiterer Beleuchtungsmodule zur Aktivierung und/oder Deaktivierung und/oder zur Dimmung der Helligkeit ausgewählter Beleuchtungselemente der weiteren Beleuchtungsmodule anzusteuern.

Auf diese Weise kann das Beleuchtungsmodul mit weiteren Beleuchtungsmodulen oder anderen Beleuchtungskörpern kommunizieren und mittels der Steuereinheit eine gezielte Aktivierung der einzelnen Beleuchtungselemente der weiteren Beleuchtungsmodule bewirken, sodass insgesamt eine zuverlässige Beleuchtung des Fluchtwegs durch beispielsweise ein gesamtes Gebäude gewährleistet ist.

Um auch die Möglichkeit bereitzustellen, dass einzelne ausgewählte Beleuchtungselemente von der Steuereinheit aktiviert werden, wenn beispielsweise ein Patient besonders dringend ärztliche Hilfe oder die Hilfe einer Pflegekraft benötigt, kann vorgesehen sein,
- dass das Beleuchtungsmodul eine, insbesondere WLAN- oder Bluetooth-fähige, Kommunikationseinheit umfasst, wobei die Kommunikationseinheit der Steuereinheit nachgeschaltet ist,
- dass die Kommunikationseinheit dazu ausgebildet ist, eine Kommunikationsverbindung mit zumindest einem, insbesondere WLAN- oder Bluetooth-fähigen, Vitalparameter-Sensor zur Überwachung eines Vitalparameters, insbesondere Puls, Blutdruck, Atemfrequenz, Blutzucker oder Körpertemperatur, einer Person herzustellen und
- dass die Steuereinheit dazu ausgebildet ist, ausgewählte Beleuchtungselemente und/oder das stationäre Leuchtmittel zu aktivieren, wenn der gemessene Vitalparameter einen vorgegebenen Schwellenwert über- oder unterschreitet.

Ist beispielsweise ein derartiger Vitalparameter-Sensor an einer Person bzw. einem Patienten befestigt und sendet Messwerte an die Kommunikationseinheit, so kann die Steuereinheit einzelne ausgewählte Beleuchtungselemente aktivieren, deaktivieren oder dimmen, wenn der gemessene Vitalparameter einen für den Patienten kritischen Wert erreicht.

Um besonders zuverlässig zu vermeiden, dass die Steuereinheit des Beleuchtungsmoduls ausgewählte Beleuchtungselemente aktiviert, wenn beispielsweise eine Pflegekraft sich in der Umgebung des Beleuchtungsmoduls bewegt und keine Aktivierung der Beleuchtungselemente erforderlich ist, da die Person, die durch diese Aktivierung geleitet werden soll, das Bett nicht verlassen hat, kann vorgesehen sein,
- dass das Beleuchtungsmodul eine, insbesondere WLAN- oder Bluetooth-fähige, Kommunikationseinheit umfasst, wobei die Kommunikationseinheit der Steuereinheit nachgeschaltet ist,
- dass die Kommunikationseinheit dazu ausgebildet ist, eine Kommunikationsverbindung mit zumindest einem externen, insbesondere WLAN- oder Bluetooth-fähigen, Sensor zur Messung zumindest eines physikalischen und/oder chemischen Parameters herzustellen und
- dass die Steuereinheit dazu ausgebildet ist, ausgewählte Beleuchtungselemente in deaktiviertem Zustand zu halten, wenn der von dem zumindest einen externen Sensor ermittelte physikalische und/oder chemische Messwert eine Bewegung einer Person in der Umgebung des externen Sensors indiziert.

Detektiert der externe Sensor beispielsweise eine Bewegung einer Person an einer Eingangstür in ein Patientenzimmer, hält die Steuereinheit die ausgewählten Beleuchtungselemente in deaktiviertem Zustand.

Weitere Vorteile und Ausführungsformen der Erfindung ergeben sich aus der Beschreibung und den beiliegenden Zeichnungen.

Besonders vorteilhafte, aber nicht einschränkend zu verstehende Ausführungsbeispiele der Erfindung werden im Folgenden anhand der beiliegenden Zeichnungen schematisch dargestellt und unter Bezugnahme auf die Zeichnungen beispielhaft beschrieben.

Im Folgenden zeigen schematisch:
Fig. 1 ein erstes Ausführungsbeispiel eines erfindungsgemäßen Beleuchtungsmoduls mit einer externen Stromversorgung,
Fig. 2 bis Fig. 5 ein Pflegebett, auf dem ein zweites Ausführungsbeispiel eines erfindungsgemäßen Beleuchtungsmoduls montiert ist,
Fig. 6 ein Pflegebett, auf dem ein drittes Ausführungsbeispiel eines erfindungsgemäßen Beleuchtungsmoduls montiert ist,
Fig. 7 eine Detailansicht des dritten Ausführungsbeispiels eines erfindungsgemäßen Beleuchtungsmoduls aus Fig. 6.

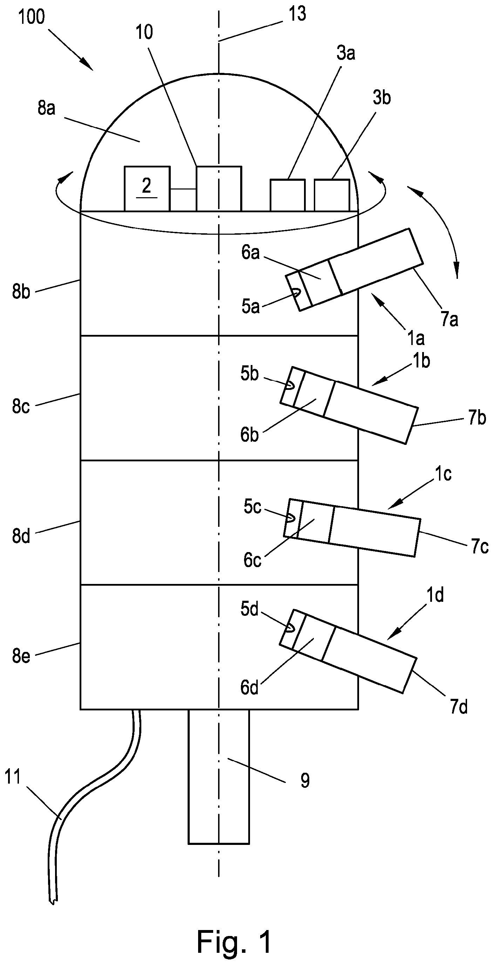

Fig. 1 zeigt ein erstes Ausführungsbeispiel eines erfindungsgemäßen Beleuchtungsmoduls 100 zur gesteuerten Abgabe von Licht mittels Beleuchtungselementen 1a, ..., 1d in einer schematischen Schnittansicht. Das Beleuchtungsmodul 100 im ersten Ausführungsbeispiel weist vier Beleuchtungselemente 1a, ..., 1d auf. Diese Anzahl an Beleuchtungselementen 1 ist jedoch keinesfalls zwingend erforderlich, da ein erfindungsgemäßes Beleuchtungsmodul zwar zumindest zwei Beleuchtungselemente 1 aufweist, jedoch darüber hinaus prinzipiell eine beliebige Anzahl an Beleuchtungselementen 1 aufweisen kann.

Wie in Fig. 1 ersichtlich sind, sind die einzelnen Beleuchtungselemente 1a, ..., 1d des Beleuchtungsmoduls 100 einzeln drehbar und einzeln schwenkbar am Beleuchtungsmodul 100 angeordnet. Im ersten Ausführungsbeispiel sind die einzelnen Beleuchtungselemente 1a, ..., 1d dabei jeweils um eine gemeinsame Achse 13 drehbar und in Richtung der gemeinsamen Achse 13 schwenkbar. Diese gemeinsame Achse 13 wird im ersten Ausführungsbeispiel durch die Längsachse des Beleuchtungsmoduls 100 festgelegt.

Das Beleuchtungsmodul 100 des ersten Ausführungsbeispiels weist eine im Wesentlichen zylindrische Form auf und ist modular aus einer Mehrzahl an einzelnen Segmenten 8a, ..., 8e aufgebaut. Wie in Fig. 1 zu erkennen ist, ist jedes Beleuchtungselement 1a, ..., 1d im ersten Ausführungsbeispiel in einem separaten Segment 8b, ..., 8e untergebracht. Die einzelnen Segmente 8b, ..., 8e, in denen Beleuchtungselemente 5a, ..., 5d untergebracht sind, weisen ebenfalls im Wesentlichen zylindrische Form auf und bilden somit Teilabschnitte des Beleuchtungsmoduls 100. Diese modulare Bauweise des Beleuchtungsmoduls 100 ermöglicht es, dass das Beleuchtungsmodul 100 auf besonders einfache Weise um beispielsweise weitere Segmente 8 mit Beleuchtungselementen 1 erweitert werden kann.

Wie in Fig. 1 schematisch angedeutet ist, können die einzelnen Segmente 8a, ..., 8e des Beleuchtungsmoduls 100 um eine gemeinsame Achse 13, im ersten Ausführungsbeispiel ist dies die Längsachse des Beleuchtungsmoduls 100, gedreht werden. Auf diese Weise kann besonders einfach die Rotationsposition der einzelnen Beleuchtungselemente 1a, ..., 1d manuell oder auch automatisiert eingestellt werden.

Wie in Fig. 1 weiters schematisch dargestellt ist, umfasst das Beleuchtungsmodul 100 im ersten Ausführungsbeispiel eine Steuereinheit 2, z.B. einen Mikroprozessor, die mit den einzelnen Beleuchtungselementen 1a, ..., 1d in Kommunikationsverbindung steht. Dies kann einerseits dadurch erzielt werden, dass die Steuereinheit 2 über eine Kabelverbindung mit den einzelnen Beleuchtungselementen 1a, ..., 1d verbunden ist. Alternativ dazu kann die Kommunikationsverbindung auch beispielsweise über eine W-LAN oder Funkverbindung wie Bluetooth hergestellt sein.

Wie in Fig. 1 weiters ersichtlich ist, umfasst ein erfindungsgemäßes Beleuchtungsmodul 100 weiters zumindest einen Sensor 3 zur Messung zumindest eines Parameters in der Umgebung des Beleuchtungsmoduls 100. Bei diesem Parameter handelt es sich insbesondere um einen physikalischen und/oder chemischen Parameter. Der Sensor 3 steht dabei mit der Steuereinheit 2 in Kommunikationsverbindung und ermittelt Messwerte des zumindest einen, insbesondere physikalischen und/oder chemischen, Parameters. Der Sensor 3 kann dabei beispielsweise als aktiver Sensor wiederholt zu vorgegebenen Zeitpunkten Messwerte des Parameters ermitteln oder auch in Form eines passiven Sensors Messwerte bereitstellen, sobald eine Veränderung des überwachten Parameters festgestellt wird.

Wenn von dem zumindest einen Sensor 3 ein zumindest einem vorgegebenen Kriterium entsprechender Messwert ermittelt wird, aktiviert die Steuereinheit 2 ausgewählte Beleuchtungselemente 1a, ..., 1d einzeln, d.h. sie schaltet sie beispielsweise einzeln ein und/oder stellt deren Rotations- und/oder Schwenkposition ein.

Wie in Fig. 1 ersichtlich ist, umfasst das Beleuchtungsmodul 100 im ersten Ausführungsbeispiel zwei Sensoren 3a, 3b, bei denen es sich um einen Bewegungssensor 3a, beispielsweise einen Ultraschallbewegungssensor oder einen Infrarotbewegungssensor, und um einen Erschütterungssensor 3b, beispielsweise einen Beschleunigungssensor, handelt.

Zusätzlich oder alternativ dazu kann bei einem erfindungsgemäßen Beleuchtungsmodul 100 als Sensor 3 auch eine Lichtschranke, beispielsweise ein Reflexionslichttaster, oder ein für zumindest einen chemischen Stoff sensitiver Sensor eingesetzt werden. Somit kann es sich bei einem derartigen Sensor 3 auch z.B. um einen Schadstoffsensor, beispielsweise einen für Kohlendioxid sensitiven Sensor, handeln.

Die Steuereinheit 2 jedes erfindungsgemäßen Beleuchtungsmoduls 100 ist dazu ausgebildet, die Beleuchtungselemente 1a, ..., 1d einzeln zu aktivieren, d.h. beispielsweise einzuschalten und/oder die Rotations- und/oder Schwenkposition ausgewählten Beleuchtungselemente 1a, ..., 1d einzustellen.

Im ersten Ausführungsbeispiel ist die Steuereinheit 2 des Beleuchtungsmoduls 100 auch dazu ausgebildet, ausgewählte Beleuchtungselemente 1a, ..., 1d einzeln zu deaktivieren, d.h. beispielsweise auszuschalten und/oder die Verstellung der Rotations- und/oder Schwenkposition zu beenden und/oder auch die Helligkeit der ausgewählten Beleuchtungselemente 1a, ..., 1d zu dimmen.

Im ersten Ausführungsbeispiel kann die Steuereinheit 2 beispielsweise die ausgewählten Beleuchtungselemente 1a, ..., 1d einzeln in einer vorgegebenen Reihenfolge aktivieren und/oder deaktivieren und/oder deren Helligkeit dimmen. Dies kann nicht nur unmittelbar nacheinander erfolgen, sondern auch in einem vorgegebenen zeitlichen Abstand zueinander. Hierauf wird im Folgenden im Zusammenhang mit dem zweiten und dritten Ausführungsbeispiel eines erfindungsgemäßen Beleuchtungsmoduls 100 noch näher eingegangen.

Als Kriterien für die Aktivierung und/oder Deaktivierung und/oder das Dimmen der Helligkeit der einzelnen Beleuchtungselemente 1a, ..., 1d kann die Steuereinheit 2 eines erfindungsgemäßen Beleuchtungsmoduls 100 generell zumindest eines oder eine Kombination folgender Kriterien heranziehen:
- Dass der vom Sensor 3 ermittelte Messwert des beispielsweise physikalischen und/oder chemischen Parameters eine Bewegung einer Person in der Umgebung des Beleuchtungsmoduls 100 indiziert,
- dass die zeitliche Änderung des vom Sensor 3 ermittelten Messwerts des zum Beispiel physikalischen und/oder chemischen Parameters einen vorgegebenen Schwellenwert übersteigt,
- dass der ermittelte Messwert selbst einen vorgegebenen Schwellenwert übersteigt,
- dass der vom Sensor 3 ermittelte Messwert des zum Beispiel physikalischen und/oder chemischen Parameters indiziert, dass sich keine Person in der Umgebung des Beleuchtungsmoduls bewegt.

Im ersten Ausführungsbeispiel sind die Steuereinheit 2, der Bewegungssensor 3a und der Erschütterungssensor 3b in einem gemeinsamen, halbkugelförmigen, Steuer-/Sensorsegment 8a untergebracht. Diese Ausgestaltung eines Steuer-/Sensorsegments 8a ermöglicht eine besonders effiziente Ermittlung von Messwerten in der Umgebung des Beleuchtungsmoduls 100.

Ein derartiges Steuer-/Sensorsegment 8a kann aber auch eine im Wesentlichen zylindrische oder eine andere geeignete Form aufweisen. Die Steuereinheit 2 und der zumindest eine Sensor 3 können auch getrennt voneinander, in unterschiedlichen Segmenten 8 untergebracht sein.

Im ersten Ausführungsbeispiel bildet das Steuer-/Sensorsegment 8a ein Ende des Beleuchtungsmoduls 100. Diese Ausgestaltungsmöglichkeit ist jedoch ebenfalls optional.

Im ersten Ausführungsbeispiel verfügt das Beleuchtungsmodul 100 weiters über eine externe Stromversorgung, was durch ein in das Beleuchtungsmodul 100 mündendes Stromkabel 11 in Fig. 1 schematisch angedeutet ist.

Wie im ersten Ausführungsbeispiel kann ein erfindungsgemäßes Beleuchtungsmodul 100 auch eine Haltevorrichtung 9 umfassen, die zur Befestigung des Beleuchtungsmoduls 100 auf einem Möbelstück, z.B. dem Fußteil oder Kopfteil eines Betts, dient, worauf im Folgenden noch näher eingegangen wird.

Optional können die einzelnen Beleuchtungselemente 1a, ..., 1d bei allen denkbaren Ausführungsbeispielen eines erfindungsgemäßen Beleuchtungsmoduls 100 auch jeweils eine Verstellvorrichtung zur Einstellung der Rotationsposition und/oder der Schwenkposition bzw. der Neigung des jeweiligen Beleuchtungselements 1a, ..., 1d in Bezug auf z.B. die gemeinsame Achse 13 umfassen, die jedoch nicht in den Fig. 1 bis 6 dargestellt ist.

Mittels einer derartigen Verstellvorrichtung kann in einer einfach aufgebauten Ausführungsform die Rotationsposition und/oder die Schwenkposition bzw. Neigung des jeweiligen Beleuchtungselements 1a, ..., 1d manuell eingestellt werden. Eine derartige Verstellvorrichtung kann jedoch auch der Steuereinheit 2 nachgeschaltet sein, sodass die Steuereinheit 2 die Rotations- und/oder Schwenkposition automatisch einstellen kann, wenn von dem zumindest einen Sensor 3 ein zumindest einem vorgegebenen Kriterium entsprechender Messwert ermittelt wird.

Die Steuereinheit 2 kann optional bei allen denkbaren Ausführungsbeispielen eines erfindungsgemäßen Beleuchtungsmoduls 100 auch dazu ausgebildet sein, die Tageszeit zu ermitteln und die Rotationsposition und/oder die Neigung des jeweiligen Beleuchtungselements 1a, ..., 1d in Abhängigkeit von der Tageszeit mittels der Verstellvorrichtung einzustellen und/oder die Rotationsposition und/oder die Neigung des jeweiligen Beleuchtungselements 1a, ..., 1d in Abhängigkeit von z.B. einem vom Helligkeitssensor 4 ermittelten Helligkeitsmesswert mittels der Verstellvorrichtung einzustellen, worauf im Zusammenhang mit dem dritten Ausführungsbeispiel noch näher eingegangen wird.

Die einzelnen Beleuchtungselemente 1a, ..., 1d des Beleuchtungsmoduls 100 umfassen im ersten Ausführungsbeispiel, das in Fig. 1 schematisch dargestellt ist, jeweils ein Leuchtmittel 5a, ..., 5d und zur Einstellung des vom Leuchtmittel 5a, ..., 5d jeweils ausgeleuchteten Umgebungsbereichs bzw. Lichtpunkts eine Linse 6a, ..., 6d und ein Fokussierungselement 7a, ..., 7d. Optional können auch zusätzlich Abdeckungen vorgesehen sein.

Wie in Fig. 1 weiters zu erkennen ist, umfassen die einzelnen Beleuchtungselemente 1a, ..., 1d im ersten Ausführungsbeispiel jeweils eine Leuchtdiode als Leuchtmittel 5a, ..., 5d, eine Linse 6a, ..., 6d und ein Fokussierungselement 7a, ..., 7d, das hohlzylindrisch ausgebildet ist.

Die Leuchtdioden auf den LED-Platinen sind im ersten Ausführungsbeispiel im Inneren des Beleuchtungsmoduls 100 bzw. im Inneren des jeweiligen Segments 8a, ..., 8d angeordnet, und leiten über die Linse 6a, ..., 6d und das Fokussierungselement 7a, ..., 7d das Licht nach außen in die Umgebung des Beleuchtungsmoduls 100, in der durch Einstellung der Rotations- und Schwenkposition vorgegebenen Richtung.

Auf den LED-Platinen können bei allen denkbaren Ausführungsbeispielen eines erfindungsgemäßen Beleuchtungsmoduls 100 auch aktive oder passive elektronische Schaltungen platziert sein, wie z.B. Konstantstromquellen.

Optional kann bei allen denkbaren Ausführungsbeispielen eines erfindungsgemäßen Beleuchtungsmoduls 100 auf die Fokussierungselemente 7a, ..., 7d auch ein weiteres Fokussierungselement oder eine weitere optische Komponente wie eine weitere Linse z.B. aufgesteckt werden, sodass der Austrittswinkel des Lichtes aus dem Fokussierungselemente 7a, ..., 7d besonders exakt eingestellt werden kann.

So können für unterschiedliche Entfernungen des auszuleuchtenden Umgebungsbereichs bzw. der erzeugten Lichtpunkte vom Beleuchtungsmodul 100 unterschiedliche weitere Fokussierungselemente oder weitere optische Komponenten vorgesehen sein. Auf diese Weise kann z.B. erzielt werden, dass alle Lichtpunkte 50a, ..., 50d; 60a, ..., 60d am Boden den gleichen Durchmesser haben, obwohl diese in unterschiedlicher Entfernung vom Beleuchtungsmodul 100 auf dem Boden erzeugt werden, da durch die weiteren Fokussierungselemente oder weiteren optischen Komponenten eine variierende Streuung des Lichts erzielt werden kann bzw. der Austrittswinkel/Abstrahlwinkel für die einzelnen Beleuchtungselemente 1a, ..., 1d besonders exakt eingestellt werden kann.

In diesem Zusammenhang kann die Steuereinheit 2 bei allen denkbaren Ausführungsbeispielen eines erfindungsgemäßen Beleuchtungsmoduls 100 optional auch dazu ausgebildet sein, automatisch zu erkennen, ob, und wenn ja, welche Linse 6a, ..., 6d und/oder welches Fokussierungselement 7a, ..., 7d bzw. ob und wenn ja, weitere Fokussierungselemente oder weitere optische Komponenten aktuell an den einzelnen Beleuchtungselementen 1a, ..., 1d angeordnet sind.

Eine Möglichkeit, um eine automatische Erkennung der Linse 6a, ..., 6d und/oder des Fokussierungselements 7a, ..., 7d bzw. eines weiteren Fokussierungselements oder weiteren optischen Komponente, die aktuell an den einzelnen Beleuchtungselementen 1a, ..., 1d angeordnet sind, zu ermöglichen, kann z.B. ein Druck-Sensor vorgesehen sein, der beim Anbringen der jeweiligen Komponente automatisch aktiviert bzw. belastet wird und ein diesbezügliches Signal an die Steuereinheit 2 übermittelt. Alternativ dazu kann ein Taster vorgesehen sein, der beim Anbringen der jeweiligen Komponente aktiviert wird.

Optional können auch mehrere verschiedene Taster vorgesehen sein, die jeweils verschiedenen Komponenten zugeordnet sind, sodass jeweils ein anderer Taster aktiviert wird und ein Signal an die Steuereinheit 2 sendet und somit eine Unterscheidung der Komponenten möglich wird. Dies ist besonders vorteilhaft, da unterschiedliche Komponenten unterschiedliche Lichtstärken benötigen, um die gleiche Helligkeit am Auftrittspunkt zu erreichen. Auf diese Weise kann die Steuereinheit 2 automatisiert erkennen, welche Licht-Helligkeit erforderlich ist, um die gewünschte Beleuchtungseigenschaft zu erzielen.

Optional kann jedes Beleuchtungselement 1a, ..., 1d oder einzelne Beleuchtungselemente 1 auch einen Glaskörper oder Diffusor zur Einstellung der Abstrahlcharakteristik umfassen.

Ein erfindungsgemäßes Beleuchtungsmodul 100 kann besonders im Pflegebereich zur Sturzprävention bei pflegebedürftigen Personen vorteilhaft eingesetzt werden. Die Vorbeugung von Stürzen ist in der Betreuung von pflegebedürftigen Menschen eine der größten Herausforderungen. Dabei ist insbesondere nachts die Verletzungsgefahr von sturzgefährdeten Personen auf Grund von erhöhten Risikofaktoren wie geringer Grundhelligkeit im Raum, eingeschränkter Sehkraft, Müdigkeit, Verwirrtheit, oder eingeschränkter Verfügbarkeit von Pflegekräften oder pflegenden Angehörigen besonders hoch.

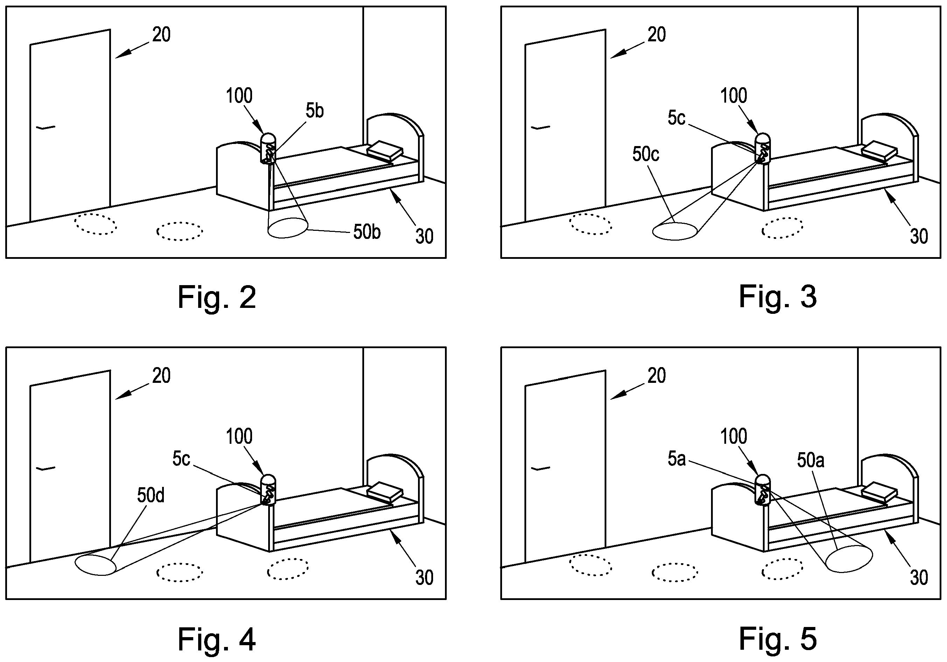

Im Folgenden wird daher anhand der Fig. 2 bis Fig. 5 ein **zweites Ausführungsbeispiel** eines erfindungsgemäßen Beleuchtungsmoduls 100 beschrieben, das mit einer Haltevorrichtung 9, wie sie im ersten Ausführungsbeispiel im Detail ersichtlich ist, an einem Fußteil des Pflegebetts 30 in einer Betreuungseinrichtung für pflegebedürftige Personen angeordnet ist.

Das zweite Ausführungsbeispiel eines erfindungsgemäßen Beleuchtungsmoduls 100 ist dabei gleich aufgebaut, wie das Beleuchtungsmodul 100 des ersten Ausführungsbeispiels. Wie auch im ersten Ausführungsbeispiel umfasst das Beleuchtungsmodul 100 im zweiten Ausführungsbeispiel einen Bewegungssensor 3a und einen Erschütterungssensor 3b. Diese Sensorkombination ist besonders geeignet, um zuverlässig zu detektieren, wenn eine Person das Pflegebett 30 verlässt.

Ein Pflegebett 30 wie es in den Fig. 2 bis 5 schematisch dargestellt ist, kann an mehreren Stellen eine - vorab eingebaute oder nachträglich montierte - Aufnahmevorrichtung zur Aufnahme der Haltevorrichtung 9 eines erfindungsgemäßen Beleuchtungsmoduls 100 aufweisen. Eine derartige Aufnahmevorrichtung ermöglicht es vorteilhafterweise auch, dass ein Beleuchtungsmodul 100 nachträglich am jeweiligen Pflegebett 30 angeordnet und auch wieder entfernt werden kann, oder die Position des Beleuchtungsmoduls 100 geändert werden kann, wenn beispielsweise die Position des Pflegebetts 30 im Raum verändert wird.

Besonders ältere Personen wachen nachts oft wiederholt auf und verspüren das Bedürfnis, die Toilette aufzusuchen, wobei der Weg zum Badezimmer und wieder zurück das Risiko eines Sturzes, bzw. einer Verletzung massiv erhöht. Da, wie bereits zuvor erwähnt, eine herkömmliche Raumbeleuchtung von den betroffenen Personen oft als unangenehm und zu hell empfunden und somit das Wiedereinschlafen erschwert wird, bietet ein erfindungsgemäßes Beleuchtungsmodul 100 vorteilhafterweise die Möglichkeit, eine sichere und angenehme Beleuchtungsumgebung für die betroffenen Personen zu schaffen, durch welche der Weg zur Toilette sicherer gemacht und der Schlafrhythmus nicht beeinträchtigt wird.

Um dies zu gewährleisten, ist die Steuereinheit 2 des Beleuchtungsmoduls 100, wie zuvor bereits beschrieben, dazu ausgebildet, ausgewählte Beleuchtungselemente 1a, ..., 1d einzeln zu aktivieren, z.B. einzuschalten und/oder deren Rotations- und/oder Schwenkposition zu verstellen, wenn von dem zumindest einen Sensor 3 des Beleuchtungsmoduls 100 ein zumindest einem vorgegebenen Kriterium entsprechender Messwert ermittelt wird.

D.h. vereinfacht gesprochen, dass die Beleuchtungselemente 1a, ..., 1d im zweiten Ausführungsbeispiel von der Steuereinheit 2 nach einem speziellen "Dimm-Rhythmus" gesteuert werden können. So können die einzelnen Beleuchtungselemente 1a, ..., 1d für die Kennzeichnung eines bestimmten Wegs, einzeln angesteuert werden und z.B. einzeln nacheinander hell und wieder dunkel gedimmt bzw. ein- und wieder ausgeschaltet werden. Dadurch können einer Person, die sich ausgehend z.B. von ihrem Pflegebett 30 zu einem bestimmten Ziel, wie der Tür 20 zum Badezimmer, bewegen soll, aufeinander folgend Lichtpunkte 50a, ..., 50d vorgegeben werden, zu denen er sich bewegen soll.

Wenn der zumindest eine Sensor 3 erkennt, dass die Person sich nicht mehr in unmittelbarer Nähe zum Pflegebett 30 befindet, kann der Dimm-Rhythmus, vereinfacht gesprochen, in umgekehrter Reihenfolge angewendet werden, sodass der Pflegebett 30 am weitesten entfernte Lichtpunkt 50d als erstes angeschaltet wird und somit dem Patienten den Weg zurück zum Pflegebett 30 vorgibt. Diese Vorgehensweise wird nun im Detail anhand des zweiten Ausführungsbeispiels eines Beleuchtungsmoduls 100 und der Fig. 2 bis 5 näher erläutert:
Das Beleuchtungsmodul 100 soll in den Fig. 2 bis 5 ausgehend vom Pflegebett 30 den Weg zur Toilette bzw. bis Tür 20 ins Badezimmer kennzeichnen, sobald eine Person das Pflegebett 30 verlässt. Dies geschieht durch gesteuerte Abgabe von Licht mittels der einzelnen Beleuchtungselemente 1a, ..., 1d in Form einzelner Lichtpunkte 50a, ..., 50d, die die Person in Richtung ihres Ziels, in den Fig. 2 bis 5 ist dies die Tür 20 zum Badezimmer, leiten. Dazu werden die Rotations- und Schwenkpositionen bzw. Neigungen der einzelnen Beleuchtungselemente 1a, ..., 1d so eingestellt, dass der zurückzulegende Weg genau gekennzeichnet ist. Die Rotations- und Schwenkpositionen der einzelnen Beleuchtungselemente 1a, ..., 1d können dabei entweder manuell eingestellt werden oder durch die Steuereinheit 2 mittels einer Verstellvorrichtung automatisch eingestellt werden, z.B. nach Vorgaben, die von einer Pflegekraft mit einer Eingabeeinheit eingegeben werden. Dazu kann das Beleuchtungsmodul 100 eine Eingabeeinheit z.B. ein Display mit Touchscreen umfassen, um Vorgaben für die Steuerungssoftware eingeben zu können.

Wie bereits zuvor erwähnt, umfasst das zweite Ausführungsbeispiel eines Beleuchtungsmoduls 100 anstelle eines einzelnen Sensors 3 einen Bewegungssensor 3a und einen Erschütterungssensor 3b, die in Kombination besonders zuverlässig detektieren, ob eine im Pflegebett 30 liegende Person das Pflegebett 30 verlässt. Der Erschütterungssensor 3b detektiert dabei jegliche Bewegung im Pflegebett 30, die in Form von Vibrationen bzw. Erschütterungen auch auf das Bettgestell und somit zum Beleuchtungsmodul 100 übertragen werden. Die Steuereinheit 2 aktiviert die Beleuchtungselemente 1a, ..., 1d jedoch nicht, bevor nicht auch der Bewegungsmelder 3a eine Bewegung detektiert, da nur dann sichergestellt ist, dass die Person auch tatsächlich das Pflegebett 30 verlassen hat und sich nicht nur z.B. im Schlaf im Pflegebett 30 umgedreht hat. Eine Aktivierung der Beleuchtungselemente 1a, ..., 1d wäre in diesem Fall nicht gewünscht, da die Person unerwünschterweise geweckt würde, was den Schlafrhythmus der Person empfindlich stören würde.

Detektieren also der Bewegungssensor 3a und der Erschütterungssensor 3b gleichzeitig eine Bewegung einer Person in der Umgebung des Beleuchtungsmoduls 100, so ist dies ein Indiz dafür, dass die Person, die zuvor im Pflegebett 30 geschlafen hat, das Pflegebett 30 verlässt bzw. gerade verlassen hat. Die Steuereinheit 2 schaltet in diesem Fall die Beleuchtungselemente 1a, ..., 1d einzeln in einer vorgegebenen Reihenfolge ein und hält sie anschließend gegebenenfalls für einen vorgegebenen Zeitraum aktiviert.

Die Steuereinheit 2 aktiviert dabei zunächst, wie in Fig. 2 ersichtlich ist, das Beleuchtungselement 5b bzw. schaltet dieses ein und es wird so ein erster Lichtpunkt 50b erzeugt, der die Startrichtung für den zu beschreitenden Weg vorgibt. Dieser erste Lichtpunkt 50b liegt in einer gewissen Entfernung zum Pflegebett 30 in Richtung der Tür 20 zum Badezimmer.

Anschließend, nach einer vorgegebenen Zeitspanne, die z.B. der Zeit entspricht, die eine Person benötigt, um den Weg bis zum ersten Lichtpunkt 50b zurückzulegen, aktiviert die Steuereinheit 2 das Beleuchtungselement 5c bzw. schaltet dieses ein und es wird so ein zweiter Lichtpunkt 50c erzeugt, der bereits weiter in Richtung der Tür 20 zum Badezimmer liegt. Dies ist in Fig. 3 schematisch dargestellt.

Nach einer vorgegebenen Zeitspanne, die z.B. der Zeit entspricht, die eine Person benötigt, um den Weg bis zum zweiten Lichtpunkt 50c zurückzulegen, aktiviert die Steuereinheit 2 das Beleuchtungselement 5d bzw. schaltet dieses ein und es wird so ein dritter Lichtpunkt 50d erzeugt, der im zweiten Ausführungsbeispiel unmittelbar vor der Tür 20 zum Badezimmer liegt. Dies ist in Fig. 4 schematisch dargestellt.

Wenn durch den Bewegungssensor 3a und den Erschütterungssensor 3b keine Bewegung der Person in der Umgebung des Beleuchtungsmoduls 100 mehr detektiert wird, d.h. die Person das Badezimmer durch die Tür 20 betreten hat, deaktiviert die Steuereinheit 2 die Beleuchtungselemente 1a, ..., 1d, d.h. sie schaltet sie ab, um Energie zu sparen.

Detektiert nur der Bewegungssensor 3a eine Bewegung einer Person in der Umgebung des Beleuchtungsmoduls 100, so erkennt die Steuereinheit 2, dass die Person aus dem Badezimmer zurückkehrt und die Steuereinheit 2 aktiviert die Beleuchtungselemente 1b, 1c, 1d einzeln in umgekehrter Reihenfolge, in einem vorgegebenen zeitlichen Abstand zueinander, d.h. sie schaltet sie in umgekehrter Reihenfolge wieder an, um der Person den Weg zurück in ihr Pflegebett 30 zu weisen.

Abschließend aktiviert die Steuereinheit 2, um der Person den Einstieg ins Pflegebett 30 zu erleichtern, das Beleuchtungselement 5a bzw. schaltet dieses ein und es wird so ein vierter Lichtpunkt 50a erzeugt, der unmittelbar vor dem Pflegebett 30 liegt. So findet die Person an der richtigen Stelle wieder zurück ins Pflegebett 30. Dies ist in Fig. 5 schematisch dargestellt.

Die Steuereinheit 2 deaktiviert bzw. schaltet das zuletzt aktivierte bzw. eingeschaltete Beleuchtungselement 1a aus, wenn wieder gleichzeitig die Bewegung einer Person durch den Bewegungssensor 3a und eine Erschütterung des Pflegebetts 30 durch den Erschütterungssensor 3b registriert wird, was bedeutet, dass die Person sich wieder im Pflegebett 30 befindet.

Optional kann bei allen denkbaren Ausführungsbeispielen eines erfindungsgemäßen Beleuchtungsmoduls 100 das Beleuchtungsmodul 100 auch eine, insbesondere WLAN- oder Bluetooth-fähige, Kommunikationseinheit 10 umfassen, die der Steuereinheit 2 nachgeschaltet ist. Eine derartige Kommunikationseinheit 10 ist schematisch in Fig. 1 dargestellt. Weist das Beleuchtungsmodul 100 eine derartige Kommunikationseinheit 10 auf, kann eine Kommunikationsverbindung mit z.B. zumindest einem, insbesondere WLAN- oder Bluetooth-fähigen, externen Sensor zur Messung zumindest eines physikalischen und/oder chemischen Parameters hergestellt werden, bei dem es sich beispielsweise um eine Lichtschranke handeln kann, die am Eingang ins Patientenzimmer angeordnet sein kann, durch den üblicherweise Pflegepersonal das Patientenzimmer betritt.

Wenn der von einem solchen externen Sensor ermittelte physikalische und/oder chemische Messwert eine Bewegung einer Person in der Umgebung des externen Sensors indiziert, erkennt die Steuereinheit 2, dass sich nicht die im Pflegebett 30 liegende Person bewegt, bzw. das Pflegebett 30 verlässt, sondern eine Pflegekraft das Patientenzimmer betreten hat. Daher hält die Steuereinheit 2 ausgewählte oder alle Beleuchtungselemente 1a, ..., 1d dann in deaktiviertem Zustand.

Optional ist es bei allen denkbaren Ausführungsbeispielen eines erfindungsgemäßen Beleuchtungsmoduls 100 auch möglich, dass das Beleuchtungsmodul 100 eine Mehrzahl gleichartiger Sensoren 3 umfasst, sodass jeder der Sensoren 3 zumindest einen physikalischen und/oder chemischen Parameter in einem vorgegebenen Teilbereich der Umgebung des Beleuchtungsmoduls 100 misst, wobei jedem der Sensoren 3 ein Beleuchtungselement 1a, ..., 1d zugeordnet ist.

Mit mehreren gleichartigen Sensoren 3 ist es der Steuereinheit 2 möglich, die einzelnen Beleuchtungselemente 1a, ..., 1d besonders gezielt dann zu aktiveren, bzw. zu deaktivieren bzw. dessen Helligkeit zu dimmen, wenn von dem, dem jeweiligen Beleuchtungselement 1a, ..., 1d zugeordneten, Sensor 3 ein zumindest einem vorgegebenen Kriterium entsprechender Messwert ermittelt wird.

Sind eine z.B. mehrere Bewegungssensoren 3a, am Umfang des Beleuchtungsmoduls 100 angeordnet, so kann die Steuereinheit 2 die Beleuchtungselemente 1a, ..., 1d vorteilhafterweise genau an die Annäherung der Person abgestimmt z.B. anschalten, unabhängig von z.B. einer vorgegebenen Zeitspanne.

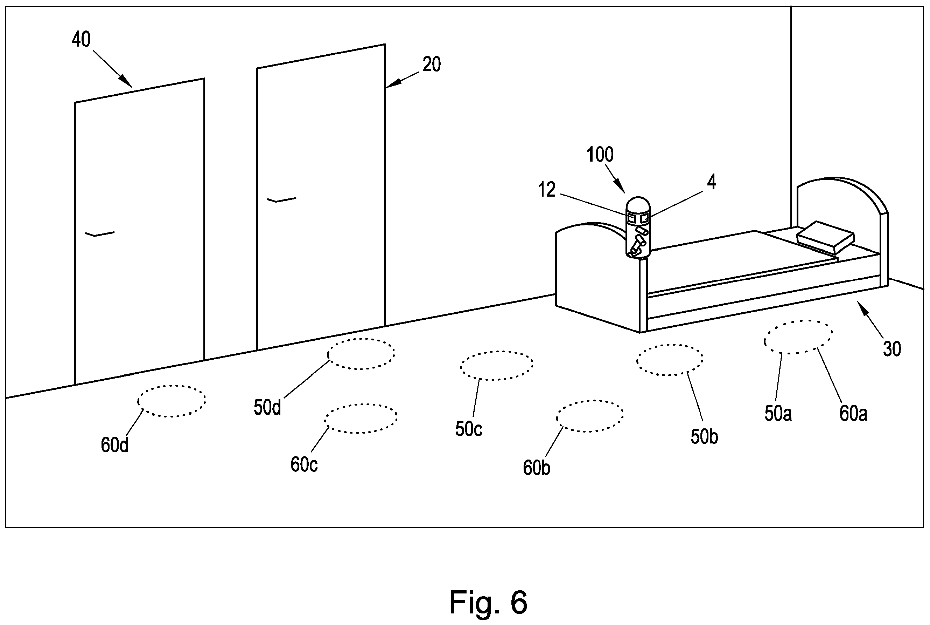

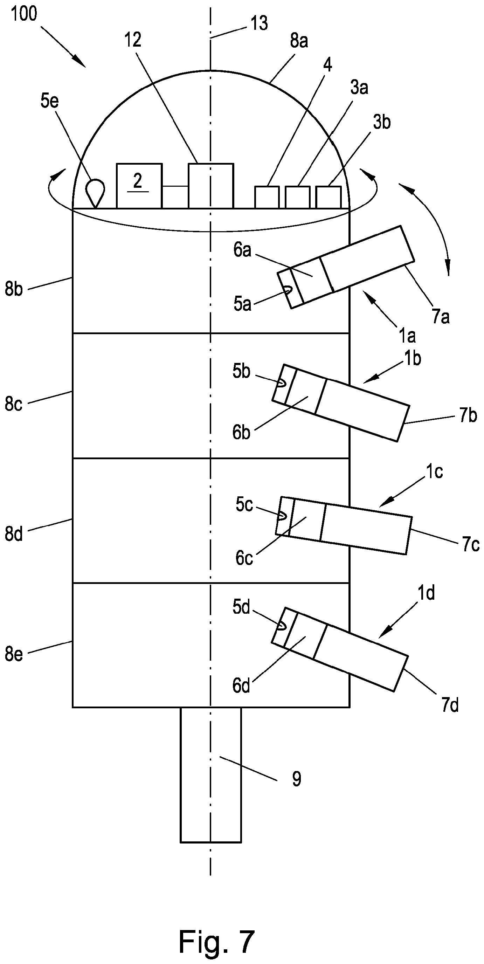

Im Folgenden wird anhand der Fig. 6 und Fig. 7 ein **drittes Ausführungsbeispiel** eines erfindungsgemäßen Beleuchtungsmoduls 100 beschrieben, das ebenfalls mit einer Haltevorrichtung 9, wie sie im ersten Ausführungsbeispiel im Detail ersichtlich ist, an einem Fußteil eines Pflegebetts 30 in einer Betreuungseinrichtung für pflegebedürftige Personen angeordnet ist.

Das dritte Ausführungsbeispiel eines erfindungsgemäßen Beleuchtungsmoduls 100 ist ähnlich aufgebaut wie das Beleuchtungsmodul 100 des ersten Ausführungsbeispiels, es weist jedoch anstelle einer externen Stromversorgung einen Akku 12 auf. Im dritten Ausführungsbeispiel bildet das Steuer-/Sensorsegment 8a ein Ende des Beleuchtungsmoduls 100 und umfasst ein stationäres, der Steuereinheit 2 nachgeschaltetes, Leuchtmittel 5e, z.B. eine Leuchtdiode.

Im dritten Ausführungsbeispiel umfasst das Beleuchtungsmodul 100 weiters einen Helligkeitssensor 4 zur Ermittlung eines Messwerts der Helligkeit in der Umgebung des Beleuchtungsmoduls 100. Der Helligkeitssensor 4 steht mit der Steuereinheit 2 in Datenkommunikation und die Steuereinheit 2 kann die Helligkeit der Beleuchtungselemente 1a, ..., 1d in Abhängigkeit von dem vom Helligkeitssensor 4 ermittelten Helligkeitsmesswert einstellen, der naturgemäß je nach Tageszeit und Lichtverhältnissen bzw. Wetterbedingungen, aber auch beispielsweise je nach Stärke der Rauchentwicklung in einem brennenden Gebäude variiert.

So ist beispielsweise in der Dämmerung oder bei leichter Rauchentwicklung weniger starkes Licht erforderlich, um einen Weg zu einer bestimmten Tür in einem Zimmer oder zum Notausgang aus einem Gebäude zu kennzeichnen, während bei z.B. bei starker Rauchentwicklung eine große Beleuchtungsintensität erforderlich ist, um eine effektive Kennzeichnung z.B. eines Fluchtwegs zu gewährleisten.

Ein großes Problem bei älteren Personen ist, dass diese oft mehrmals in der Nacht aus dem Schlaf gerissen werden und sich auf den Weg zur Toilette begeben müssen. Dadurch wird einerseits die Schlafdauer verkürzt und andererseits leidet auch die Schlafqualität darunter. Zusätzlich fällt älteren Person das Wiedereinschlafen oft schwer, wenn z.B. die Raumbeleuchtung zu hell ist, was das Wohlbefinden beeinträchtigt. Durch die richtige Helligkeit kann einerseits eine optimale Kennzeichnung des Wegs zum gewünschten Ziel, z.B. zur Tür 20 zum Badezimmer, garantiert werden und andererseits gewährleistet werden, dass der Schlafrhythmus nicht oder nur geringfügig beeinträchtigt wird. In diesem Zusammenhang kann der Einbau eines Helligkeitssensors 4 in das Beleuchtungsmodul 100 besonders vorteilhaft sein, da dann die Steuereinheit 2 in Abhängigkeit der Umgebungshelligkeit bzw. in Abhängigkeit vom Helligkeitsmesswert, der vom Helligkeitssensor 4 bereitgestellt wird, die Helligkeit der Lichtpunkte 50a, ..., 50d; 60a, ..., 60d definiert einstellen kann.

Im dritten Ausführungsbeispiel umfasst das Beleuchtungsmodul 100 jeweils eine der nachgeschaltete Steuereinheit 2 Verstellvorrichtung zur Einstellung der Rotationsposition und/oder der Neigung für jedes der einzelnen Beleuchtungselemente 1a, ..., 1d, wie sie bereits zuvor beschrieben wurde. Weiters verfügt das Beleuchtungsmodul 100 im dritten Ausführungsbeispiel über einen Helligkeitssensor 4 und zusätzlich über eine Echtzeituhr, die beide mit der Steuereinheit 2 in Datenverbindung stehen. So kann die Steuereinheit 2, z.B. je nach Tageszeit und Helligkeit im Raum, mittels der Beleuchtungselemente 1a, ..., 1d unterschiedliche Lichtpunkte 50a, ..., 50d; 60a, ..., 60d erzeugen, gibt, die unterschiedliche Wege kennzeichnen, wie dies in Fig. 6 schematisch angedeutet ist.

Im dritten Ausführungsbeispiel wird nachts, beispielsweise in einem Zeitraum zwischen 21.00 und 06.00 Uhr und/oder wenn der vom Helligkeitssensor 4 bereitgestellte Helligkeitsmesswert einen vorgegebenen Schwellenwert unterschreitet, der Weg vom Pflegebett 30 bis zur Tür 20 ins Badezimmer gekennzeichnet, wenn der Bewegungssensor 3a und der Erschütterungssensor 3b detektieren, dass die Person das Pflegebett 30 verlässt. Dazu werden die Rotations- und Schwenkpositionen bzw. Neigungen der einzelnen Beleuchtungselemente 1a, ..., 1d von der Steuereinheit 2 so eingestellt und die einzelnen Beleuchtungselemente 1a, ..., 1d derart nacheinander aktiviert bzw. eingeschaltet, dass die Lichtpunkte 50a, ..., 50d den Weg zur Tür 20 ins Badezimmer kennzeichnen. Zusätzlich wird die Helligkeit der einzelnen Beleuchtungselemente 1a, ..., 1d von der Steuereinheit 2 dem vom Helligkeitssensor 4 bereitgestellte Helligkeitsmesswert entsprechend eingestellt, um z.B. eine zu grelle Beleuchtung zu vermeiden.

Tagsüber, z.B. in einem Zeitraum zwischen 06.00 und 21.00 Uhr und/oder wenn der vom Helligkeitssensor 4 bereitgestellte Helligkeitsmesswert einen vorgegebenen Schwellenwert überschreitet, werden die Rotations- und Schwenkpositionen bzw. Neigungen der einzelnen Beleuchtungselemente 1a, ..., 1d von der Steuereinheit 2 so eingestellt und die einzelnen Beleuchtungselemente 1a, ..., 1d derart nacheinander aktiviert bzw. eingeschaltet, dass der Weg vom Pflegebett 30 bis zur Tür 40 in die Küche gekennzeichnet ist, wenn der Bewegungssensor 3a und der Erschütterungssensor 3b detektieren, dass die Person das Pflegebett 30 verlässt.

Optional können dazu, wie im dritten Ausführungsbeispiel, ausgewählte oder alle Beleuchtungselemente 1a, ..., 1d bei allen denkbaren Ausführungsbeispielen eines erfindungsgemäßen Beleuchtungsmoduls 100 auch mehrfarbige Leuchtmittel 5a, ..., 5d umfassen, beispielsweise mehrfarbige Leuchtdioden oder mehrere, Licht unterschiedlicher Wellenlänge abgebende Leuchtdioden. In diesem Fall kann die Steuereinheit 2 für die Vorgabe der von den Leuchtmitteln 5a, ..., 5d abgegebenen Lichtfarbe die Tageszeit z.B. anhand einer integrierten Echtzeituhr ermitteln und in Abhängigkeit von der Tageszeit die von den Leuchtmitteln 5a, ..., 5d abgegebene Lichtfarbe auswählen und/oder z.B. in Abhängigkeit von einem von einem Helligkeitssensor 4 ermittelten Helligkeitsmesswert auswählen.

So sind im dritten Ausführungsbeispiel beispielsweise blaue und grüne Leuchtdioden als Leuchtmittel 5a, ..., 5d vorgesehen, die angesteuert durch die Steuereinheit 2 blaue Lichtpunkte 50a, ..., 50d erzeugen, die den Weg zur Tür 20 ins Badezimmer markieren, und grüne Lichtpunkte 60a, ..., 60d, die den Weg zur Tür 40 in die Küche markieren.

Optional kann bei allen denkbaren Ausführungsbeispielen eines erfindungsgemäßen Beleuchtungsmoduls 100 das Beleuchtungsmodul 100 auch ein Sprachsteuerungssystem umfassen, das es einem Patienten ermöglicht, über Sprachsteuerung auszuwählen, welche Lichtpunkte 50a, ..., 50d; 60a, ..., 60d aktiv werden sollen.

Generell kann bei allen denkbaren Ausführungsbeispielen eines erfindungsgemäßen Beleuchtungsmoduls 100 ein Akku 12 vorgesehen sein, wie er in Fig. 7 schematisch dargestellt ist. Verfügt ein erfindungsgemäßes Beleuchtungsmodul 100 wie im dritten Ausführungsbeispiel über einen Akku 12, so kann dieser in einem eigenen Segment 8 oder mit der Steuereinheit 2 in einem gemeinsamen Segment 8 untergebracht sein, und über einen Stecker, z.B. einen USB-Stecker aufgeladen werden kann. Ein solches Segment 8 mit einem Akku 12 kann starr, d.h. ohne Rotationsmöglichkeit am Beleuchtungsmodul 100 angeordnet sein. Ein solches Segment 8 kann auch optional ein Batterie-Management-System umfassen.

Optional kann bei allen denkbaren Ausführungsbeispielen eines erfindungsgemäßen Beleuchtungsmoduls 100 auch vorgesehen sein, dass das Steuer-/Sensorsegment 8a einen solchen Akku 12 umfasst. Optional kann die Steuereinheit 2 über ein Bus-System Daten, wie beispielsweise den Ladestand, aus dem Akku 12 auslesen. Die Steuereinheit 2 kann dann z.B. ein Leuchtmittel 5, beispielsweise das stationäre Leuchtmittel 5e, anschalten, um derart eine Warnmeldung abzugeben, dass der Akkuladestand niedrig ist. Optional kann die Steuereinheit 2 auch über eine drahtlose Kommunikationsverbindung beispielsweise einer Pflegekraft mitteilen, dass der Akkuladestand niedrig ist, und ein Aufladen erforderlich ist.

Ein Segment 8 mit einem Akku 12 kann des Weiteren auch so ausgestaltet sein, dass dessen Außenwand lichtdurchlässig ist. Hinter dieser Außenwand um den Akku 12 herum können Leuchtmittel 5 angebracht sein, wobei es sich z.B. um Leuchtmittel 5 mit zwei verschiedenen Lichtfarben wie warmweiße und kaltweiße Leuchtdioden handeln kann.

Derartige Leuchtmittel 5 können der Steuereinheit 2 nachgeschaltet sein, und je nach Tageszeit oder Helligkeitsmesswert kann die Steuereinheit 2 Leuchtmittel 5 mit einer bestimmten Lichtfarbe, z.B. beim Aufwachen und tagsüber kaltweiß, und morgens, abends, sowie beim Einschlafen warmweiß, aktivieren. Die Steuereinheit 2 kann auch dazu ausgebildet sein, derartige Leuchtmittel 5 mit einer bestimmten Helligkeit und/oder Lichtfarbe in einem solchen Akku-Segment aus Energiespargründen nur beim Einschlafen und beim Aufwachen zu aktivieren, um Personen das Einschlafen zu erleichtern, die Angst im Dunkeln haben.

Alle denkbare Ausführungsbeispiele eines erfindungsgemäßen Beleuchtungsmoduls 100 können auch unabhängig von einer externen Stromquelle ausgestaltet sein. In diesem Fall kann das Beleuchtungsmodul 100 ein Solar- oder Photovoltaik-Segment aufweisen, wobei dieses Solar- oder Photovoltaik-Segment eine Solar- oder Photovoltaikzelle aufweist, die mit einem Akku 12 des Beleuchtungsmoduls 100 verbunden ist und diesen lädt.

Optional kann ein Beleuchtungsmodul 100 mit einem derartigen Solar- oder Photovoltaik-Segment und einem Akku 12 auch einen Helligkeitssensor 4 aufweisen, wie er zuvor beschrieben wurde. So können beispielsweise tagsüber, wenn der in der Umgebung des Beleuchtungsmoduls 100 vom Helligkeitssensor 4 ermittelte Helligkeitsmesswert des Beleuchtungsmoduls 100 einen vorgegebenen Helligkeitsschwellenwert übersteigt, Teile des Beleuchtungsmoduls 100 oder das gesamte Beleuchtungsmoduls 100 deaktiviert sein und der Akku 12 durch die Solar- oder Photovoltaikzelle aufgeladen werden.

Nachts, wenn der in der Umgebung des Beleuchtungsmoduls 100 vom Helligkeitssensor 4 ermittelte Helligkeitsmesswert des Beleuchtungsmoduls 100 unterhalb des vorgegebenen Helligkeitsschwellenwerts liegt, kann das Beleuchtungsmodul 100 einsatzbereit und die Steuereinheit 2 bereit zur Aktivierung bzw. Deaktivierung bzw. Dimmung ausgewählter einzelner Beleuchtungselemente 1a, ..., 1d sein.

Optional kann die Steuereinheit 2 zusätzlich oder alternativ zu einem Helligkeitssensor 4 eine Echtzeituhr umfassen oder mit einer solchen verbunden sein, sodass die Steuereinheit 2 über die aktuelle Uhrzeit verfügt und zwischen Tag- und Nacht-Zyklus mittels einer Echtzeituhr unterscheiden kann.

Optional kann bei allen denkbaren Ausführungsbeispielen eines erfindungsgemäßen Beleuchtungsmoduls 100 ein Segment 8 des Beleuchtungsmoduls 100 auch über einen USB- oder SD-Anschluss verfügen, an welchen ein USB-Stick oder eine Speicherkarte angeschlossen werden kann, welche z.B. bekannte Musik aus der Kindheit des Patienten enthalten, die dann z.B. mittels der Steuereinheit 2 abgespielt werden kann. Auf diese Weise können in demenzkranken Personen vertraute Erinnerungen z.B. an ihre Kindheit geweckt werden, was beruhigen wirken kann. Auf ähnliche Weise können auch bekannte Gerüche vertraute Erinnerungen an die Kindheit in demenzkranken Personen wecken.

Daher kann ein erfindungsgemäßes Beleuchtungsmodul 100 optional auch ein Segment 8 mit einer Vorrichtung zur Abgabe von Raumdüften umfassen, die gesteuert durch die Steuereinheit 2 abgegeben werden können.

Optional kann bei allen denkbaren Ausführungsbeispielen eines erfindungsgemäßen Beleuchtungsmoduls 100 das Beleuchtungsmodul 100 auch ein Mikrophon und/oder Lautsprecher umfassen, sodass der Patient gegebenenfalls über Sprachsteuerung mit dem Beleuchtungsmodul 100 oder mit dem Pflegepersonal oder anderen Menschen kommunizieren kann, sowie gegebenenfalls über das Beleuchtungsmodul 100 Musik oder Radio hören kann.

Optional kann bei allen denkbaren Ausführungsbeispielen eines erfindungsgemäßen Beleuchtungsmoduls 100 ein Segment 8 des Beleuchtungsmoduls 100 auch einen mit der Steuereinheit 2 in Datenkommunikation stehenden Sensor 3 zur Messung z.B. des CO₂-Gehalts, oder auch der Temperatur oder Luftfeuchtigkeit in der Luft in der Umgebung des Beleuchtungsmoduls 100 umfassen. Wenn der vom Sensor 3 ermittelte CO₂-Messwert einen vorgegebenen Schwellenwert übersteigt, kann die Steuereinheit 2 z.B. eine vorgegebenes Beleuchtungselement 1a, ..., 1d oder z.B. ein stationäres Leuchtmittel 5e, wie es im dritten Ausführungsbeispiel in Fig. 7 vorhanden ist, aktivieren, um ein Alarmsignal abzugeben.

Optional kann bei allen denkbaren Ausführungsbeispielen eines erfindungsgemäßen Beleuchtungsmoduls 100 das Beleuchtungsmodul 100 auch eine, z.B. WLAN- oder Bluetooth-fähige, Kommunikationseinheit 10 umfassen, wie dies in Fig. 1 schematisch dargestellt ist. Eine derartige Kommunikationseinheit 10 ist der Steuereinheit 2 nachgeschaltet, und kann eine Kommunikationsverbindung mit z.B. zumindest einem, insbesondere WLAN- oder Bluetooth-fähigen, Vitalparameter-Sensor zur Überwachung eines Vitalparameters wie Puls, Blutdruck, Atemfrequenz, Blutzucker oder Körpertemperatur, einer Person herstellen, der beispielsweise an der Person bzw. dem Patient angeordnet sein kann. Die Steuereinheit 2 ist in diesem Fall dazu ausgebildet, ausgewählte Beleuchtungselemente 1a, ..., 1d und/oder ein stationäres Leuchtmittel 5e, wie es im dritten Ausführungsbeispiel in Fig. 7 vorhanden ist, zu aktivieren, wenn der gemessene Vitalparameter einen vorgegebenen Schwellenwert über- oder unterschreitet.

Auf diese Weise kann effektiv mit dem Pflegpersonal kommuniziert werden, wenn eine Person Hilfe benötigt, oder auch, wie zuvor beschrieben, wenn z.B. die Luftqualität im Raum schlecht ist, und eine Pflegekraft das Fenster öffnen sollte, um die Luftqualität zu verbessern. Diese Kommunikation zwischen dem Beleuchtungsmodul 100 und dem Pflegepersonal ermöglicht reduzierte Kontrollgänge, erholsameren Schlaf und mehr Zeit für zwischenmenschliche Interaktion.

Optional kann auch eine Aufzeichnung des Schlafrhythmus mittels eines erfindungsgemäßen Beleuchtungsmoduls 100 vorgenommen werden, indem z.B. mit einem Erschütterungssensor 3b des Beleuchtungsmoduls 100 die Bewegungen des Patienten registriert und gemessen werden und somit die Tiefe des Schlafes und weitere Informationen zum Schlaf des Patienten von der Steuereinheit 2 erfasst werden. Derartige Informationen können mittels der Kommunikationseinheit 10 auch an das Pflegepersonal oder an eine Datenaufzeichnungseinheit weitergeleitet werden, sodass das Pflegepersonal den Schlafrhythmus beobachten kann, oder in der Früh direkt vom Beleuchtungsmodul 100 abrufen kann, z.B. über Display, oder USB-Anschluss.

Optional kann mittels der Kommunikationseinheit 10 auch eine Kommunikation mit externer Software erfolgen, sodass das Pflegepersonal informiert wird, wenn die Person das Pflegebett 30 verlässt, bzw. über die Dauer dieses Bett-Exits, sowie durch den Erschütterungssensor 3b über den Schlafrhythmus oder den Schlaf-Zustand, sowie gegebenenfalls über andere Messdaten, die das Beleuchtungsmodul 100 misst oder aufzeichnet, z.B. auch CO₂-Gehalt in der Luft etc.

Bei allen denkbaren Ausführungsbeispielen eines erfindungsgemäßen Beleuchtungsmoduls 100 kann vorgesehen sein, dass die Steuereinheit 2 alle Messergebnisse aufzeichnet und diese Daten anonymisiert, wobei diese Daten an eine zentrale Weiterverarbeitungseinheit weitergeleitet werden können, welche anonymisierte Daten von sehr vielen Beleuchtungsmodulen 100 erhalten, diese auswerten und somit durch die Menge der unterschiedlichen, gegebenenfalls anonymisierten Daten erweiterte Erkenntnisse erlangen kann. So kann man beispielsweise durch die Erschütterungssensoren 3b in den Beleuchtungsmodulen 100 der Schlafrhythmus von vielen Personen aufgezeichnet und in der anonymisierten Auswertung in der zentralen Weiterverarbeitungseinheit ausgewertet werden, und so neue Erkenntnisse beispielsweise zum Schlafrhythmus von Menschen mit einem bestimmten Krankheitsbild erlangt werden. Dabei kann optional mittels eines Eingabegeräts, entweder direkt am Beleuchtungsmodul 100 oder durch eine drahtlose Kommunikationsverbindung, das Krankheitsbild des Patienten eingeben, sodass die später anonymisierten Daten besser kategorisiert werden und aussagekräftigere Erkenntnisse gewonnen werden können.

Insbesondere können zum Beispiel folgende patientenbezogenen Werte ermittelt werden und gegebenenfalls an das Pflegepersonal sowie gegebenenfalls an eine zentralen Datenauswertungsstelle zur anonymisierten Datenauswertung weitergeleitet werden:
- Registrierung des Bett-Exit, d.h. wenn die Person das Pflegebett 30 verlässt,
- Erkennung des Bett-Entry, d.h. wenn die Person in das Pflegebett 30 zurückkehrt,
- Bewegungen im Pflegebett 30
- Schlafrhythmus
- Atemfrequenz, Puls, Geräusche,...
- Feuchtigkeit
- (Schlaf-) Position im Bett

Weiters kann bei allen denkbaren Ausführungsbeispielen eines erfindungsgemäßen Beleuchtungsmoduls 100 optional auch vorgesehen sein, dass das Beleuchtungsmodul 100 ein Segment 8 mit einer integrierten Wärmebildkamera umfasst, mittels der die Körpertemperatur des Patienten gemessen, bzw. überwacht und beobachtet werden kann. Dies kann insbesondere für das Pflegepersonal hilfreich sein, wenn der Patient krank ist, z.B. Fieber hat, wobei dadurch eine erleichterte Kontrolle des Gesundheitszustandes möglich wird.

Optional können von der Steuereinheit 2 auch, z.B. mittels künstlicher Intelligenz beispielsweise auf Grund der aktuell erfassten Daten die daraus resultierenden optimalen Umgebungsverhältnisse hinsichtlich Helligkeit, Luftqualität, Bett-Neigung, Luftfeuchtigkeit etc. abgeleitet werden, und so eine weitere Unterstützung für das Pflegepersonal und für die zu Pflegenden selbst darstellen.

Diese empfohlenen Einstellungen wie auch kritische Schwellenwertüber- oder -unterschreitungen von gemessenen Vitalparametern oder anderen aufgezeichneten Messwerten können gegebenenfalls, z.B. über WLAN- oder Bluetooth-Kommunikationsverbindung, mittels der Kommunikationseinheit 10 an z.B. einen Anzeigemodul, beispielsweise einen Smartphone, übermittelt werden und somit dem Pflegepersonal angezeigt werden.

Zwar wurden zuvor zwei Ausführungsbeispiele eines erfindungsgemäßen Beleuchtungsmoduls 100 beschreiben, die besonders vorteilhaft in Pflegeeinrichtungen und in der Unterstützung bzw. Betreuung von pflegebedürftigen Personen eingesetzt werden können. Ein erfindungsgemäßes Beleuchtungsmodul 100 kann jedoch in vielfältigsten Bereichen eingesetzt werden.

So kann ein erfindungsgemäßes Beleuchtungsmodul 100, wie es zuvor beschrieben wurde, für Notbeleuchtung sorgen, die Personen in einem Gebäude den Fluchtweg zu einem Notausgang kennzeichnet. Dazu kann z.B. ein einzelnes Beleuchtungsmodul 100 beispielsweise an der Decke, am Boden oder an einer Wand eines Raumes angeordnet sein, um den Personen im Notfall den Fluchtweg aus dem Raum mittels Lichtpunkten 50 anzuzeigen.

Die Steuereinheit 2 schaltet in diesem Fall, wenn der, beispielsweise von einem als CO₂-Detektor ausgebildeten chemischen Sensor 3 ermittelte, CO₂-Messwert in der Umgebung des Beleuchtungsmoduls 100 einen vorgegebenen Schwellenwert übersteigt oder die zeitliche Änderung des vom Sensor 3 ermittelten Messwerts einen vorgegebenen Schwellenwert übersteigt, die einzelnen Beleuchtungselemente 1a, ..., 1d an und kennzeichnet so den Weg zum Fluchtweg. Die Rotations- und/oder Schwenkpositionen können dazu bereits vorab manuell oder automatisiert von der Steuereinheit 2 eingestellt sein, um eine rasche Beleuchtung des Fluchtwegs zu erzielen.

Optional kann auch eine ganze Reihe an erfindungsgemäßen Beleuchtungsmodulen 100 im gesamten Gebäude angeordnet sein, die jeweils eine, insbesondere WLAN- oder Bluetooth-fähige, Kommunikationseinheit 10 umfassen, wobei die Kommunikationseinheit 10 jeweils der Steuereinheit 2 des jeweiligen Beleuchtungsmoduls 100 nachgeschaltet ist. Die Kommunikationseinheiten 10 sind ausgebildet, eine Kommunikationsverbindung mit weiteren, insbesondere gleichartig aufgebauten, Beleuchtungsmodulen 100' und/oder, z.B. WLAN- oder Bluetooth-fähigen, Beleuchtungskörpern herzustellen.

Wird von zumindest einem Sensor 3, z.B. einem CO₂-Sensor eines Beleuchtungsmoduls 100 in einem Raum ein Messwert ermittelt, der z.B. einen vorgegebenen Schwellenwert übersteigt, kann die Steuereinheit 2 ausgewählte Beleuchtungskörper zu aktivieren und/oder zu deaktivieren und/oder deren Helligkeit zu dimmen und/oder die Steuereinheit ausgewählter weiterer Beleuchtungsmodule zur Aktivierung und/oder Deaktivierung und/oder zur Dimmung der Helligkeit ausgewählter Beleuchtungselemente der weiteren Beleuchtungsmodule anzusteuern, sodass Personen rasch aus dem Gebäude flüchten können, indem sie von einem Beleuchtungsmodul 100 zum nächsten geleitet werden.

## Patentansprüche

1. Beleuchtungsmodul (100) zur gesteuerten Abgabe von Licht mittels Beleuchtungselementen (1; 1a, ..., 1d), umfassend
- zumindest zwei Beleuchtungselemente (1; 1a, ..., 1d),
- wobei die einzelnen Beleuchtungselemente (1; 1a, ..., 1d) jeweils, insbesondere um eine gemeinsame Achse (13), drehbar und jeweils, insbesondere zur gemeinsamen Achse (13), schwenkbar angeordnet sind,
- eine mit den einzelnen Beleuchtungselementen (1; 1a, ..., 1d) in Kommunikationsverbindung stehende Steuereinheit (2), und
- zumindest einen Sensor (3) zur Messung zumindest eines, insbesondere physikalischen und/oder chemischen, Parameters in der Umgebung des Beleuchtungsmoduls (100),
- wobei der Sensor (3) mit der Steuereinheit (2) in Kommunikationsverbindung steht,
- wobei der Sensor (3) dazu ausgebildet ist, insbesondere wiederholt zu vorgegebenen Zeitpunkten, Messwerte des zumindest einen Parameters zu ermitteln, und
- wobei die Steuereinheit (2) dazu ausgebildet ist, ausgewählte Beleuchtungselemente (1; 1a, ..., 1d) einzeln zu aktivieren, insbesondere einzuschalten und/oder deren Rotations- und/oder Schwenkposition zu verstellen, wenn von dem zumindest einen Sensor (3) ein zumindest einem vorgegebenen Kriterium entsprechender Messwert ermittelt wird,
**dadurch gekennzeichnet, dass**
- -das Beleuchtungsmodul (100) modular aus einer Mehrzahl von einzelnen Segmenten (8; 8a, ..., 8e) aufgebaut ist, wobei jedes Beleuchtungselement (1; 1a, ..., 1d) jeweils in einem separaten Segment (8; 8a, ..., 8e) untergebracht ist und wobei das Beleuchtungsmodul (100) durch weitere Segmente (8; 8a, ..., 8e), insbesondere durch weitere Segmente (8; 8a, ..., 8e) mit Beleuchtungselementen (1; 1a, ..., 1d), erweiterbar ist und, dass
- das Beleuchtungsmodul (100) eine im Wesentlichen zylindrische Form aufweist, und die Segmente (8; 8a, ..., 8e) des Beleuchtungsmoduls (100) Teilabschnitte des Beleuchtungsmoduls (100) mit im Wesentlichen zylindrischer Form bilden.

2. Beleuchtungsmodul (100) nach Anspruch 1, **dadurch gekennzeichnet, dass** die Steuereinheit (2) dazu ausgebildet ist,
- ausgewählte Beleuchtungselemente (1; 1a, ..., 1d) einzeln zu deaktivieren, insbesondere auszuschalten und/oder die Verstellung der Rotations- und/oder Schwenkposition des jeweiligen Beleuchtungselements (1; 1a, ..., 1d) zu beenden, und/oder die Helligkeit der ausgewählten Beleuchtungselemente (1; 1a, ..., 1d) zu dimmen, wenn von dem zumindest einen Sensor (3; 3a, 3b) ein zumindest einem vorgegebenen Kriterium entsprechender Messwert ermittelt wird und/oder
- die ausgewählten Beleuchtungselemente (1; 1a, ..., 1d) in einer vorgegebenen Reihenfolge, insbesondere in einem vorgegebenen zeitlichen Abstand zueinander, einzeln zu aktivieren und/oder zu deaktivieren und/oder deren Helligkeit einzustellen.

3. Beleuchtungsmodul (100) nach einem der vorangehenden Ansprüche, **dadurch gekennzeichnet,**
- **dass** der zumindest eine Sensor (3)
- ein Bewegungssensor (3a), insbesondere ein Ultraschall-Bewegungssensor oder ein Infrarot-Bewegungssensor, oder
- ein Erschütterungssensor (3b), insbesondere ein Beschleunigungssensor, oder
- eine Lichtschranke, insbesondere ein Reflexions-Lichttaster, oder
- ein für zumindest einen chemischen Stoff, insbesondere einen Schadstoff, sensitiver Sensor, insbesondere ein für CO₂ sensitiver Sensor,
ist, und/oder
- **dass** die Steuereinheit (2) dazu ausgebildet ist, für die Aktivierung und/oder Deaktivierung und/oder das Einstellen der Helligkeit der Beleuchtungselemente (1; 1a, ..., 1d) zumindest eines der folgenden Kriterien heranzuziehen:
- **dass** der vom Sensor (3) ermittelte Messwert des, insbesondere physikalischen und/oder chemischen, Parameters eine Bewegung einer Person in der Umgebung des Beleuchtungsmoduls (100) indiziert,
- **dass** der vom Sensor (3) ermittelte Messwert des, insbesondere physikalischen und/oder chemischen, Parameters indiziert, dass sich keine Person in der Umgebung des Beleuchtungsmoduls (100) bewegt,
- **dass** die zeitliche Änderung des vom Sensor (3) ermittelten Messwerts des, insbesondere physikalischen und/oder chemischen, Parameters einen vorgegebenen Schwellenwert übersteigt,
- **dass** der vom Sensor (3) ermittelte Messwert des, insbesondere physikalischen und/oder chemischen, Parameters einen vorgegebenen Schwellenwert übersteigt.

4. Beleuchtungsmodul (100) nach Anspruch 3, **dadurch gekennzeichnet, dass** das Beleuchtungsmodul (100) einen Bewegungssensor (3a) und einen Erschütterungssensor (3b) umfasst, und dass die Steuereinheit (2) dazu ausgebildet ist,
- bei gleichzeitiger Detektion einer Bewegung einer Person in der Umgebung des Beleuchtungsmoduls (100) durch den Bewegungssensor (3a) und den Erschütterungssensor (3b) die Beleuchtungselemente (1; 1a, ..., 1d) einzeln in einer vorgegebenen Reihenfolge zu aktivieren, und insbesondere anschließend für einen vorgegebenen Zeitraum aktiviert zu halten,
- die Beleuchtungselemente (1; 1a, ..., 1d) zu deaktivieren, wenn durch den Bewegungssensor (3a) und den Erschütterungssensor (3b) keine Bewegung einer Person in der Umgebung des Beleuchtungsmoduls (100) detektiert wird und
- bei Detektion einer Bewegung einer Person in der Umgebung des Beleuchtungsmoduls (100) nur durch den Bewegungssensor (3a) die Beleuchtungselemente (1; 1a, ..., 1d) einzeln in umgekehrter Reihenfolge zu aktivieren.

5. Beleuchtungsmodul (100) nach einem der vorangehenden Ansprüche, **dadurch gekennzeichnet,**
- **dass** eine Mehrzahl gleichartiger Sensoren (3) am Beleuchtungsmodul (100) derart angeordnet ist, dass jeder der Sensoren (3) zumindest einen physikalischen und/oder chemischen Parameter in einem vorgegebenen Teilbereich der Umgebung des Beleuchtungsmoduls (100) misst,
- **dass** jedem der Sensoren (3) ein Beleuchtungselement (1; 1a, ..., 1d) zugeordnet ist und
- **dass** die Steuereinheit (2) dazu ausgebildet ist, wenn von einem Sensor (3) ein zumindest einem vorgegebenen Kriterium entsprechender Messwert ermittelt wird, das dem jeweiligen Sensor (3) zugeordnete Beleuchtungselement (1; 1a, ..., 1d) zu aktivieren und/oder zu deaktivieren und/oder dessen Helligkeit einzustellen, insbesondere zu dimmen.

6. Beleuchtungsmodul (100) nach einem der vorangehenden Ansprüche, **dadurch gekennzeichnet,**
- **dass** das Beleuchtungsmodul (100) einen Helligkeitssensor (4) zur Ermittlung eines Messwerts der Helligkeit in der Umgebung des Beleuchtungsmoduls (100) umfasst, wobei der Helligkeitssensor (4) mit der Steuereinheit (2) in Datenkommunikation steht und
- **dass** die Steuereinheit (2) dazu ausgebildet ist, die Helligkeit der Beleuchtungselemente (1; 1a, ..., 1d) in Abhängigkeit von dem vom Helligkeitssensor (4) ermittelten Helligkeitsmesswert einzustellen.

7. Beleuchtungsmodul (100) nach einem der vorangehenden Ansprüche, **dadurch gekennzeichnet, dass** die einzelnen Beleuchtungselemente (1; 1a, ..., 1d) jeweils folgende Bestandteile umfassen:
- ein Leuchtmittel (5; 5a, ..., 5d), insbesondere eine Leuchtdiode, und
- zur Einstellung des vom Leuchtmittel (5; 5a, ..., 5d) ausgeleuchteten Umgebungsbereichs, insbesondere eines Lichtpunkts (50a, ..., 50d; 60a, ..., 60d), eine Linse (6; 6a, ..., 6d) und/oder ein, insbesondere hohlzylindrisch ausgebildetes, Fokussierungselement (7; 7a, ..., 7d).

8. Beleuchtungsmodul (100) nach einem der vorangehenden Ansprüche, **dadurch gekennzeichnet, dass** jedes Beleuchtungselement (1; 1a, ..., 1d) mehrfarbige Leuchtmittel (5; 5a, ..., 5d), insbesondere mehrfarbige Leuchtdioden oder mehrere, Licht unterschiedlicher Wellenlänge abgebende Leuchtdioden, umfasst,
wobei insbesondere vorgesehen sein kann, dass die Steuereinheit (2) dazu ausgebildet ist,
- die von den Leuchtmitteln (5; 5a, ..., 5d) abgegebene Lichtfarbe in Abhängigkeit von dem vom Helligkeitssensor (4) ermittelten Helligkeitsmesswert auszuwählen und/oder
- die Tageszeit zu ermitteln und in Abhängigkeit von der Tageszeit die von den Leuchtmitteln (5; 5a, ..., 5d) abgegebene Lichtfarbe auszuwählen.

9. Beleuchtungsmodul (100) nach einem der vorangehenden Ansprüche, **dadurch gekennzeichnet, dass** jedes Beleuchtungselement (1; 1a, ..., 1d) eine Verstellvorrichtung zur Einstellung der Rotationsposition und/oder der Neigung des Beleuchtungselements (1; 1a, ..., 1d), insbesondere in Bezug auf die gemeinsame Achse (13), umfasst, wobei die Verstellvorrichtung der Steuereinheit (2) nachgeschaltet ist,
wobei insbesondere vorgesehen sein kann, dass die Steuereinheit (2) dazu ausgebildet ist,
- die Rotationsposition und/oder die Neigung des jeweiligen Beleuchtungselements (1; 1a, ..., 1d) in Abhängigkeit von dem vom Helligkeitssensor (4) ermittelten Helligkeitsmesswert mittels der Verstellvorrichtung einzustellen und/oder
- die Tageszeit zu ermitteln und die Rotationsposition und/oder die Neigung des jeweiligen Beleuchtungselements (1; 1a, ..., 1d) in Abhängigkeit von der Tageszeit mittels der Verstellvorrichtung einzustellen.

10. Beleuchtungsmodul (100) nach einem der vorangehenden Ansprüche, **dadurch gekennzeichnet, dass** ausgewählte Segmente (8; 8a, ..., 8e) des Beleuchtungsmoduls (100), insbesondere ausgewählte Segmente (8; 8a, ..., 8e) mit Beleuchtungselementen (1; 1a, ..., 1d), um die Längsachse des Beleuchtungsmoduls (100) drehbar sind.

11. Beleuchtungsmodul (100) nach einem der vorangehenden Ansprüche, **dadurch gekennzeichnet, dass** die Steuereinheit (2) und der zumindest eine Sensor (3) in einem gemeinsamen, insbesondere halbkugelförmigen, Steuer-/Sensorsegment (8a) untergebracht sind,
wobei insbesondere vorgesehen ist,
- dass das Steuer-/Sensorsegment (8a) ein Ende des Beleuchtungsmoduls (100) bildet und/oder
- dass das Steuer-/Sensorsegment (8a) ein stationäres, der Steuereinheit (2) nachgeschaltetes, Leuchtmittel (5e), insbesondere eine Leuchtdiode, umfasst.

12. Beleuchtungsmodul (100) nach einem der vorangehenden Ansprüche, **dadurch gekennzeichnet, dass** das Beleuchtungsmodul (100) eine Haltevorrichtung (9) umfasst, wobei die Haltevorrichtung (9) zur Befestigung des Beleuchtungsmoduls (100) auf einem Möbelstück, insbesondere einem Bett, vorzugsweise einem Fußteil oder Kopfteil eines Pflegebetts, ausgebildet ist.

13. Beleuchtungsmodul (100) nach einem der vorangehenden Ansprüche, **dadurch gekennzeichnet,**
- **dass** das Beleuchtungsmodul (100) eine, insbesondere WLAN- oder Bluetooth-fähige, Kommunikationseinheit (10) umfasst, wobei die Kommunikationseinheit (10) der Steuereinheit (2) nachgeschaltet ist,
- **dass** die Kommunikationseinheit (10) dazu ausgebildet ist, eine Kommunikationsverbindung mit weiteren, insbesondere gleichartig aufgebauten, Beleuchtungsmodulen und/oder, insbesondere WLAN- oder Bluetooth-fähigen, Beleuchtungskörpern herzustellen, und
- **dass** die Steuereinheit (2) dazu ausgebildet ist, wenn von dem zumindest einen Sensor (3) ein zumindest einem vorgegebenen Kriterium entsprechender Messwert ermittelt wird,
- ausgewählte Beleuchtungskörper zu aktivieren und/oder zu deaktivieren und/oder deren Helligkeit zu dimmen
und/oder
- die Steuereinheit ausgewählter weiterer Beleuchtungsmodule zur Aktivierung und/oder Deaktivierung und/oder zur Dimmung der Helligkeit ausgewählter Beleuchtungselemente der weiteren Beleuchtungsmodule anzusteuern.

14. Beleuchtungsmodul (100) nach einem der vorangehenden Ansprüche, **dadurch gekennzeichnet,**
- **dass** das Beleuchtungsmodul (100) eine, insbesondere WLAN- oder Bluetooth-fähige, Kommunikationseinheit (10) umfasst, wobei die Kommunikationseinheit (10) der Steuereinheit (2) nachgeschaltet ist,
- **dass** die Kommunikationseinheit (10) dazu ausgebildet ist, eine Kommunikationsverbindung mit zumindest einem, insbesondere WLAN- oder Bluetooth-fähigen, Vitalparameter-Sensor zur Überwachung eines Vitalparameters, insbesondere Puls, Blutdruck, Atemfrequenz, Blutzucker oder Körpertemperatur, einer Person herzustellen und
- **dass** die Steuereinheit (2) dazu ausgebildet ist, ausgewählte Beleuchtungselemente (1; 1a, ..., 1d) und/oder das stationäre Leuchtmittel (5e) zu aktivieren, wenn der gemessene Vitalparameter einen vorgegebenen Schwellenwert über- oder unterschreitet.

15. Beleuchtungsmodul (100) nach einem der vorangehenden Ansprüche, **dadurch gekennzeichnet,**
- **dass** das Beleuchtungsmodul (100) eine, insbesondere WLAN- oder Bluetooth-fähige, Kommunikationseinheit (10) umfasst, wobei die Kommunikationseinheit (10) der Steuereinheit (2) nachgeschaltet ist,
- **dass** die Kommunikationseinheit (10) dazu ausgebildet ist, eine Kommunikationsverbindung mit zumindest einem externen, insbesondere WLAN- oder Bluetooth-fähigen, Sensor zur Messung zumindest eines physikalischen und/oder chemischen Parameters herzustellen und
- **dass** die Steuereinheit (2) dazu ausgebildet ist, ausgewählte Beleuchtungselemente (1; 1a, ..., 1d) in deaktiviertem Zustand zu halten, wenn der von dem zumindest einen externen Sensor ermittelte physikalische und/oder chemische Messwert eine Bewegung einer Person in der Umgebung des externen Sensors indiziert.

## Claims

1. A lighting module (100) for the controlled emission of light by means of lighting elements (1; 1a, ..., 1d), comprising
- at least two lighting elements (1; 1a, ..., 1d),
- wherein the individual lighting elements (1; 1a, ..., 1d) are each arranged rotatably, in particular about a common axis (13), and are each arranged pivotably, in particular with respect to the common axis (13),
- a control unit (2) in communication connection with the individual lighting elements (1; 1a, ..., 1d), and
- at least one sensor (3) for measuring at least one, in particular physical and/or chemical, parameter in the environment of the lighting module (100),
- wherein the sensor (3) is in communication connection with the control unit (2),
- wherein the sensor (3) is designed to determine, in particular repeatedly at predetermined times, measured values of the at least one parameter, and
- wherein the control unit (2) is designed to activate selected lighting elements (1; 1a, ..., 1d) individually, in particular to switch them on, and/or to adjust their rotational and/or pivoting position when a measured value corresponding to at least one predetermined criterion is determined by the at least one sensor (3)
**characterized in that**
- the lighting module (100) is modularly constructed from a plurality of individual segments (8; 8a, ..., 8e), wherein each lighting element (1; 1a, ..., 1d) is accommodated in each case in a separate segment (8; 8a, ..., 8e), and wherein the lighting module (100) is expandable by further segments (8; 8a, ..., 8e), in particular by further segments (8; 8a, ..., 8e) with lighting elements (1; 1a, ..., 1d) and that
- the lighting module (100) has a substantially cylindrical shape, and that the segments (8; 8a, ..., 8e) of the lighting module (100) form subsections of the lighting module (100) with a substantially cylindrical shape.

2. The lighting module (100) according to claim 1, **characterized in that** the control unit (2) is designed
- to deactivate selected lighting elements (1; 1a, ..., 1d) individually, in particular to switch them off and/or to terminate the adjustment of the rotational and/or pivoting position of the respective lighting element (1; 1a, ..., 1d), and/or to dim the brightness of the selected lighting elements (1; 1a, ..., 1d) when a measured value corresponding to at least one predetermined criterion is determined by the at least one sensor (3; 3a, 3b) and/or
- to individually activate and/or deactivate the selected lighting elements (1; 1a, ..., 1d) and/or to adjust their brightness in a predetermined sequence, in particular at a predetermined time interval from one another.

3. The lighting module (100) according to any one of the preceding claims, **characterized in**
- **that** the at least one sensor (3) is
- a motion sensor (3a), in particular an ultrasonic motion sensor or an infrared motion sensor, or
- a vibration sensor (3b), in particular an acceleration sensor, or
- a photoelectric sensor, in particular a diffuse reflection sensor, or
- a sensor that is sensitive to at least one chemical substance, in particular a pollutant, in particular a sensor sensitive to CO₂, and/or
- **that** the control unit (2) is designed to use at least one of the following criteria for activating and/or deactivating and/or adjusting the brightness of the lighting elements (1; 1a, ..., 1d):
- **that** the measured value of the, in particular physical and/or chemical, parameter determined by the sensor (3) indicates a movement of a person in the environment of the lighting module (100),
- **that** the measured value of the, in particular physical and/or chemical, parameter determined by the sensor (3) indicates that no person is moving in the environment of the lighting module (100),
- **that** the change over time of the measured value of the, in particular physical and/or chemical, parameter determined by the sensor (3) exceeds a predetermined threshold value,
- **that** the measured value of the, in particular physical and/or chemical, parameter determined by the sensor (3) exceeds a predetermined threshold value.

4. The lighting module (100) according to claim 3, **characterized in that** the lighting module (100) comprises a motion sensor (3a) and a vibration sensor (3b), and **in that** the control unit (2) is designed to
- upon simultaneous detection of a movement of a person in the environment of the lighting module (100) by the movement sensor (3a) and the vibration sensor (3b), activate the lighting elements (1; 1a, ..., 1d) individually in a predetermined sequence, and in particular to subsequently keep them activated for a predetermined period of time,
- deactivate the lighting elements (1; 1a, ..., 1d) if no movement of a person in the environment of the lighting module (100) is detected by the motion sensor (3a) and the vibration sensor (3b), and
- upon detection of a movement of a person in the environment of the lighting module (100) only by the motion sensor (3a), activate the lighting elements (1; 1a, ..., 1d) individually in reverse order.

5. The lighting module (100) according to any one of the preceding claims, **characterized in that**,
- a plurality of sensors (3) of the same type are arranged on the lighting module (100) in such a manner that each of the sensors (3) measures at least one physical and/or chemical parameter in a predetermined subregion of the environment of the lighting module (100),
- a lighting element (1; 1a, ..., 1d) is assigned to each of the sensors (3), and
- the control unit (2) is designed to activate and/or deactivate the lighting element (1; 1a, ..., 1d) assigned to the respective sensor (3) and/or to adjust its brightness, in particular to dim it, when a measured value corresponding to at least one predefined criterion is determined by a sensor (3).

6. The lighting module (100) according to any one of the preceding claims, **characterized in that**,
- the lighting module (100) comprises a brightness sensor (4) for determining a measured value of the brightness in the environment of the lighting module (100), wherein the brightness sensor (4) is in data communication with the control unit (2) and
- the control unit (2) is designed to adjust the brightness of the lighting elements (1; 1a, ..., 1d) as a function of the brightness measured value determined by the brightness sensor (4).

7. The lighting module (100) according to any one of the preceding claims, **characterized in that** the individual lighting elements (1; 1a, ..., 1d) each comprise the following components:
- a light source (5; 5a, ..., 5d), in particular a light-emitting diode, and
- a lens (6; 6a, ..., 6d) and/or a focusing element (7; 7a, ..., 7d), in particular of hollow cylindrical design, for adjusting the environmental area illuminated by the light source (5; 5a, ..., 5d), in particular a light spot (50a, ..., 50d; 60a, ..., 60d).

8. The lighting module (100) according to any one of the preceding claims, **characterized in that** each lighting element (1; 1a, ..., 1d) comprises multi-color light sources (5; 5a, ..., 5d), in particular multi-color light-emitting diodes or multiple light-emitting diodes emitting light of different wavelengths,
wherein it can be provided, in particular, that the control unit (2) is designed to
- select the light color emitted by the light sources (5; 5a, ..., 5d) as a function of the brightness measured value determined by the brightness sensor (4) and/or
- determine the time of day and select the light color emitted by the light sources (5; 5a, ..., 5d) depending on the time of day.

9. The lighting module (100) according to any one of the preceding claims, **characterized in that** each lighting element (1; 1a, ..., 1d) comprises an adjustment device for adjusting the rotational position and/or the inclination of the lighting element (1; 1a, ..., 1d), in particular with respect to the common axis (13), wherein the adjustment device is connected downstream of the control unit (2),
wherein it can be provided, in particular, that the control unit (2) is designed to
- adjust the rotational position and/or the inclination of the respective lighting element (1; 1a, ..., 1d) as a function of the brightness measured value determined by the brightness sensor (4) by means of the adjustment device and/or
- determine the time of day and adjust the rotational position and/or the inclination of the respective lighting element (1; 1a, ..., 1d) as a function of the time of day by means of the adjustment device.

10. The lighting module (100) according to any one of the preceding claims, **characterized in that** selected segments (8; 8a, ..., 8e) of the lighting module (100), in particular selected segments (8; 8a, ..., 8e) with lighting elements (1; 1a, ..., 1d), are rotatable about the longitudinal axis of the lighting module (100).

11. The lighting module (100) according to any one of the preceding claims, **characterized in that** the control unit (2) and the at least one sensor (3) are accommodated in a common, in particular hemispherical, control/sensor segment (8a),
wherein it is, in particular, provided
- that the control/sensor segment (8a) forms one end of the lighting module (100) and/or
- that the control/sensor segment (8a) comprises a stationary light source (5e), in particular a light-emitting diode, connected downstream of the control unit (2).

12. The lighting module (100) according to any one of the preceding claims, **characterized in that** the lighting module (100) comprises a holding device (9), wherein the holding device (9) is designed for fastening the lighting module (100) on a piece of furniture, in particular a bed, preferably a foot part or head part of a care bed.

13. The lighting module (100) according to any one of the preceding claims, **characterized in that**,
- the lighting module (100) comprises a communication unit (10), in particular with WLAN or Bluetooth capability, wherein the communication unit (10) is connected downstream of the control unit (2),
- the communication unit (10) is designed to establish a communication connection with further, in particular similarly constructed, lighting modules and/or, in particular, lighting units with WLAN or Bluetooth capability, and
- the control unit (2) is designed, when a measured value corresponding to at least one predetermined criterion is determined by the at least one sensor (3),
- to activate and/or deactivate selected lighting units and/or dim their brightness
and/or
- to control the control unit of selected further lighting modules to activate and/or deactivate and/or dim the brightness of selected lighting elements of the further lighting modules.

14. The lighting module (100) according to any one of the preceding claims, **characterized in that**,
- the lighting module (100) comprises a communication unit (10), in particular with WLAN or Bluetooth capability, wherein the communication unit (10) is connected downstream of the control unit (2),
- the communication unit (10) is designed to establish a communication connection with at least one vital parameter sensor, in particular with WLAN or Bluetooth capability, for monitoring a vital parameter, in particular pulse, blood pressure, respiratory rate, blood sugar or body temperature, of a person, and
- the control unit (2) is designed to activate selected lighting elements (1; 1a, ..., 1d) and/or the stationary light source (5e) if the measured vital parameter exceeds or falls below a predetermined threshold value.

15. The lighting module (100) according to any one of the preceding claims, **characterized in that**,
- the lighting module (100) comprises a communication unit (10), in particular with WLAN or Bluetooth capability, wherein the communication unit (10) is connected downstream of the control unit (2),
- the communication unit (10) is designed to establish a communication connection with at least one external sensor, in particular with WLAN or Bluetooth capability, for measuring at least one physical and/or chemical parameter, and
- the control unit (2) is designed to keep selected lighting elements (1; 1a, ..., 1d) in a deactivated state if the physical and/or chemical measured value determined by the at least one external sensor indicates a movement of a person in the environment of the external sensor.

## Revendications

1. Module d'éclairage (100) pour l'émission commandée de lumière au moyen d'éléments d'éclairage (1 ; 1a, 1d), comprenant
- au moins deux éléments d'éclairage (1 ; 1a, ..., 1d),
- dans lequel les éléments d'éclairage (1; 1a, ..., 1d) individuels sont disposés respectivement de manière rotative, en particulier autour d'un axe commun (13), et respectivement de manière pivotante, en particulier par rapport à l'axe commun (13),
- un dispositif de commande (2) étant en liaison de communication avec les éléments d'éclairage (1; 1a, ..., 1d) individuels, et
- au moins un capteur (3) pour la mesure d'au moins un paramètre, en particulier physique et/ou chimique, à proximité du module d'éclairage (100),
- dans lequel le capteur (3) est en liaison de communication avec le dispositif de commande (2),
- dans lequel le capteur (3) est conçu pour déterminer, en particulier à plusieurs reprises à des instants prédéterminés, des valeurs de mesure de l'au moins un paramètre, et
- dans lequel le dispositif de commande (2) est conçu pour activer individuellement, en particulier mettre sous tension des éléments d'éclairage (1 ; 1a, ..., 1d) sélectionnés et/ou régler leur position de rotation et/ou de pivotement, lorsqu'au moins une valeur de mesure correspondant à un critère prédéterminé est déterminée par l'au moins un capteur (3), **caractérisé en ce que**
- le module d'éclairage (100) est construit de manière modulaire à partir d'une pluralité de segments (8 ; 8a, ..., 8e) individuels, dans lequel chaque élément d'éclairage (1 ; 1a, ..., 1d) est logé respectivement dans un segment (8 ; 8a, ..., 8e) distinct et dans lequel le module d'éclairage (100) peut être étendu par d'autres segments (8 ; 8a, ..., 8e), en particulier par d'autres segments (8 ; 8a, ..., 8e) avec des éléments d'éclairage (1 ; 1a, ..., 1d), et, **en ce que**
- le module d'éclairage (100) présente une forme sensiblement cylindrique, et les segments (8 ; 8a, ..., 8e) du module d'éclairage (100) forment des sections du module d'éclairage (100) de forme sensiblement cylindrique.

2. Module d'éclairage (100) selon la revendication 1, **caractérisé en ce que** le dispositif de commande (2) est conçu pour
- désactiver individuellement, en particulier mettre hors tension des éléments d'éclairage (1 ; 1a, ..., 1d) sélectionnés et/ou arrêter le réglage de la position de rotation et/ou de pivotement de l'élément d'éclairage (1 ; 1a, ..., 1d) respectif, et/ou diminuer la luminosité des éléments d'éclairage (1 ; 1a, ..., 1d) sélectionnés, lorsqu'au moins une valeur de mesure correspondant à un critère prédéterminé est déterminée par l'au moins un capteur (3 ; 3a, 3b) et/ou
- activer et/ou désactiver individuellement les éléments d'éclairage (1 ; 1a, ..., 1d) sélectionnés selon un ordre prédéterminé, en particulier selon un intervalle de temps prédéterminé entre eux et/ou paramétrer leur luminosité.

3. Module d'éclairage (100) selon l'une quelconque des revendications précédentes, **caractérisé en ce que**
- l'au moins un capteur (3) est
- un capteur de mouvements (3a), en particulier un capteur de mouvements à ultrasons ou un capteur de mouvements à infrarouge, ou
- un capteur de vibrations (3b), en particulier un capteur d'accélération, ou
- une barrière photoélectrique, en particulier une cellule réflex à détection directe, ou
- un capteur sensible pour au moins une substance chimique, en particulier une substance nocive, en particulier un capteur sensible au CO₂,
et/ou
- **en ce que** le dispositif de commande (2) est conçu pour utiliser au moins l'un des critères suivants pour l'activation et/ou la désactivation et/ou le paramétrage de la luminosité des éléments d'éclairage (1 ; 1a, ..., 1d) :
- **en ce que** la valeur de mesure déterminée par le capteur (3) du paramètre, en particulier physique et/ou chimique, indique un mouvement d'une personne à proximité du module d'éclairage (100),
- **en ce que** la valeur de mesure déterminée par le capteur (3) du paramètre, en particulier physique et/ou chimique, indique qu'aucune personne ne se déplace à proximité du module d'éclairage (100),
- **en ce que** la variation dans le temps de la valeur de mesure déterminée par le capteur (3) du paramètre, en particulier physique et/ou chimique, dépasse un seuil prédéterminé,
- **en ce que** la valeur de mesure déterminée par le capteur (3) du paramètre, en particulier physique et/ou chimique, dépasse un seuil prédéterminé.

4. Module d'éclairage (100) selon la revendication 3, **caractérisé en ce que** le module d'éclairage (100) comprend un capteur de mouvements (3a) et un capteur de vibrations (3b), et **en ce que** le dispositif de commande (2) est conçu pour
- lors de la détection simultanée d'un mouvement d'une personne à proximité du module d'éclairage (100) par le capteur de mouvements (3a) et le capteur de vibrations (3b) activer individuellement les éléments d'éclairage (1 ; 1a, 1d) selon un ordre prédéterminé, et en particulier maintenir ensuite l'activation pendant une période prédéterminée,
- désactiver les éléments d'éclairage (1 ; 1a, ..., 1d), lorsqu'aucun mouvement d'une personne n'est détecté à proximité du module d'éclairage (100) par le capteur de mouvements (3a) et le capteur de vibrations (3b) et
- lors de la détection d'un mouvement d'une personne à proximité du module d'éclairage (100) uniquement par le capteur de mouvements (3a) activer individuellement les éléments d'éclairage (1; 1a, ..., 1d) selon un ordre inverse.

5. Module d'éclairage (100) selon l'une quelconque des revendications précédentes, **caractérisé en ce que**
- une pluralité de capteurs (3) similaires sont disposés au niveau du module d'éclairage (100), de telle manière que chacun des capteurs (3) mesure au moins un paramètre physique et/ou chimique dans une zone partielle prédéterminée à proximité du module d'éclairage (100),
- chacun des capteurs (3) est associé à un élément d'éclairage (1 ; 1a, ..., 1d) et
- le dispositif de commande (2) est conçu pour, lorsqu'au moins une valeur de mesure correspondant à un critère prédéterminé est déterminée par un capteur (3), activer et/ou désactiver l'élément d'éclairage (1 ; 1a, ..., 1d) associé au capteur respectif (3) et/ou paramétrer, en particulier diminuer, sa luminosité.

6. Module d'éclairage (100) selon l'une quelconque des revendications précédentes, **caractérisé en ce que**
- le module d'éclairage (100) comprend un capteur de luminosité (4) pour la détermination d'une valeur de mesure de la luminosité à proximité du module d'éclairage (100), dans lequel le capteur de luminosité (4) est en communication de données avec le dispositif de commande (2) et
- le dispositif de commande (2) est conçu pour paramétrer la luminosité des éléments d'éclairage (1; 1a, ..., 1d) en fonction de la valeur de mesure de luminosité déterminée par le capteur de luminosité (4).

7. Module d'éclairage (100) selon l'une quelconque des revendications précédentes, **caractérisé en ce que** les éléments d'éclairage (1; 1a, ..., 1d) individuels comprennent respectivement les composants suivants :
- un moyen d'éclairage (5; 5a, ..., 5d), en particulier une diode électroluminescente, et
- pour le paramétrage de la zone environnante éclairée par un moyen d'éclairage (5 ; 5a, ..., 5d), en particulier un point lumineux (50a, ..., 50d ; 60a, ..., 60d), une lentille (6 ; 6a, ..., 6d) et/ou un élément de focalisation (7 ; 7a, ..., 7d) conçu en particulier de manière cylindrique creux.

8. Module d'éclairage (100) selon l'une quelconque des revendications précédentes, **caractérisé en ce que** chaque élément d'éclairage (1 ; 1a, ..., 1d) comprend des moyens d'éclairage (5 ; 5a, ..., 5d) multicolores, en particulier des diodes électroluminescentes multicolores ou plusieurs diodes électroluminescentes émettant de la lumière de différentes longueurs d'onde,
dans lequel il peut être prévu en particulier que le dispositif de commande est conçu pour
- sélectionner la couleur de la lumière émise par les moyens d'éclairage (5 ; 5a, ..., 5d) en fonction de la valeur de mesure de luminosité déterminée par le capteur de luminosité (4) et/ou
- déterminer l'heure et sélectionner en fonction de l'heure la couleur de lumière émise par les moyens d'éclairage (5 ; 5a, ..., 5d).

9. Module d'éclairage (100) selon l'une quelconque des revendications précédentes, **caractérisé en ce que** chaque élément d'éclairage (1 ; 1a, ..., 1d) comprend un dispositif de réglage pour le paramétrage de la position de rotation et/ou de l'inclinaison de l'élément d'éclairage (1 ; 1a, ..., 1d), en particulier en ce qui concerne l'axe commun (13), dans lequel le dispositif de réglage est monté en aval du dispositif de commande (2),
dans lequel il peut être prévu en particulier que le dispositif de commande est conçu pour
- paramétrer la position de rotation et/ou l'inclinaison de chaque élément d'éclairage (1 ; 1a, ..., 1d) en fonction de la valeur de mesure de luminosité déterminée par le capteur de luminosité (4) au moyen du dispositif de réglage et/ou
- déterminer l'heure et paramétrer la position de rotation et/ou l'inclinaison de chaque élément d'éclairage (1 ; 1a, ..., 1d) en fonction de l'heure au moyen du dispositif de réglage.

10. Module d'éclairage (100) selon l'une quelconque des revendications précédentes, **caractérisé en ce que** des segments (8 ; 8a, ..., 8e) sélectionnés du module d'éclairage (100), en particulier des segments (8 ; 8a, ..., 8e) sélectionnés avec des éléments d'éclairage (1; 1a, ..., 1d) peuvent tourner autour de l'axe longitudinal du module d'éclairage (100).

11. Module d'éclairage (100) selon l'une quelconque des revendications précédentes, **caractérisé en ce que** le dispositif de commande (2) et l'au moins un capteur (3) sont logés dans un segment de commande/de capteur (8a) commun, en particulier hémisphérique,
dans lequel est prévu en particulier,
- que le segment de commande/de capteur (8a) forme une extrémité du module d'éclairage (100) et/ou
- que le segment de commande/de capteur (8a) comprend un moyen d'éclairage (5e), en particulier une diode électroluminescente, fixe, montée en aval du dispositif de commande (2).

12. Module d'éclairage (100) selon l'une quelconque des revendications précédentes, **caractérisé en ce que** le module d'éclairage (100) comprend un dispositif de retenue (9), dans lequel le dispositif de retenue (9) est conçu pour la fixation du module d'éclairage (100) sur une pièce de mobilier, en particulier un lit, de préférence un pied de lit ou une tête de lit d'un lit médicalisé.

13. Module d'éclairage (100) selon l'une quelconque des revendications précédentes, **caractérisé en ce que**
- le module d'éclairage (100) comprend une unité de communication (10) en particulier compatible WLAN ou Bluetooth, dans lequel l'unité de communication (10) est montée en aval du dispositif de commande (2),
- l'unité de communication (10) est conçue pour établir une liaison de communication avec d'autres modules d'éclairage, en particulier construits de manière similaire, et/ou, en particulier des luminaires compatibles WLAN ou Bluetooth, et
- le dispositif de commande (2) est conçu pour, lorsqu'une valeur de mesure correspondant à au moins un critère prédéterminé déterminée par l'au moins un capteur (3),
- activer et/ou désactiver des luminaires sélectionnés et/ou diminuer leur luminosité
et/ou
- actionner le dispositif de commande de l'autre module d'éclairage sélectionné pour l'activation et/ou la désactivation et/ou la diminution de la luminosité d'éléments d'éclairage sélectionnés des autres modules d'éclairage.

14. Module d'éclairage (100) selon l'une quelconque des revendications précédentes, **caractérisé en ce que**
- le module d'éclairage (100) comprend une unité de communication (10) en particulier compatible WLAN ou Bluetooth, dans lequel l'unité de communication (10) est montée en aval du dispositif de commande (2),
- l'unité de communication (10) est conçue pour établir une liaison de communication avec au moins un capteur des signes vitaux, en particulier compatible WLAN ou Bluetooth pour la surveillance d'un signe vital, en particulier le pouls, la pression artérielle, la fréquence cardiaque, la glycémie ou la température corporelle d'une personne et
- le dispositif de commande (2) est conçu pour activer des éléments d'éclairage (1 ; 1a, ..., 1d) sélectionnés et/ou le moyen d'éclairage (5e) fixe, lorsque le signe vital mesuré est supérieur ou inférieur à un seuil prédéterminé.

15. Module d'éclairage (100) selon l'une quelconque des revendications précédentes, **caractérisé en ce que**
- le module d'éclairage (100) comprend une unité de communication (10) en particulier compatible WLAN ou Bluetooth, dans lequel l'unité de communication (10) est montée en aval du dispositif de commande (2),
- l'unité de communication (10) est conçue pour établir une liaison de communication avec au moins un capteur externe, en particulier compatible WLAN ou Bluetooth pour la mesure d'au moins un paramètre physique et/ou chimique et
- le dispositif de commande (2) est conçu pour maintenir des éléments d'éclairage (1; 1a, ..., 1d) sélectionnés à l'état désactivé, lorsque la valeur de mesure physique et/ou chimique déterminée par l'au moins un capteur externe indique un mouvement d'une personne à proximité du capteur externe.
